# EUROPEAN PATENT SPECIFICATION

(11) **EP 2 218 988 B1**
(45) Date of publication and mention of the grant of the patent: **04.05.2016**
(21) Application number: 08847265.9
(22) Date of filing: 05.11.2008
(51) Int. Cl.: B05B 5/057, F25D 17/04

(54) **REFRIGERATOR**
KÜHLVORRICHTUNG
RÉFRIGÉRATEUR

(30) Priority: 06.11.2007 JP 2007288372; 06.11.2007 JP 2007288374; 25.01.2008 JP 2008014626
(43) Date of publication of application: 18.08.2010
(60) Divisional application: 12163011.5
(73) Proprietor: Panasonic Corporation, Kadoma-shi Osaka 571-8501 (JP)
(72) Inventor: Kiyoshi Mori, Chuo-ku, Osaka 540-6207 (JP); Kakita Kenichi, Chuo-ku, Osaka 540-6207 (JP); Tosiaki Mamemoto, Chuo-ku, Osaka 540-6207 (JP); Yoshihiro Ueda, Chuo-ku, Osaka 540-6207 (JP); Toyoshi Kamisako, Chuo-ku, Osaka 540-6207 (JP); Takahiro Ueno, Chuo-ku, Osaka 540-6207 (JP)
(74) Representative: Eisenführ Speiser
(86) International application number: PCT/JP2008/003171
(87) International publication number: WO 2009/060592

(56) References cited:
- WO-A1-2006/009189
- WO-A1-2008/072771
- JP-A- 11 267 552
- JP-A- 2003 106 753
- JP-A- 2005 270 669
- JP-A- 2006 057 999
- JP-A- 2006 150 334
- JP-A- 2006 205 094
- JP-A- 2006 272 093
- JP-A- 2007 101 034
- JP-A- 2007 278 569

## Description

### Technical Field

The present invention relates to refrigerators having a liquid spray device employing an electrostatic atomization method.

### Background Art

In recent years, there has been an increase in home appliances that electrostatically atomize liquid and spray the resulting electrically-charged fine liquid particles to a widespread area in order to enhance deodorization effects, antibacterial effects, and the like.

Document WO 2006/009189 A1 discloses a storage compartment and a refrigerator having the same, wherein the refrigerator comprises a mist spray part which is adapted for spraying fine mist of water to storage items in the storage compartment of the refrigerator. The mist sprayed on stored items such as vegetable or fruit serves to maintain freshness thereof. The mist spray part includes an atomization electrode which is arranged in an inner casing which also includes an opposite electrode. A high voltage circuit applies a high voltage between the atomization electrode and the opposite electrode. Water on the atomization electrode can be sprayed into the storage compartment. The refrigerator and specifically the mist spray part is at least partly surrounded and covered by an outer casing which serves for protecting the atomization electrode from being touched by the user.

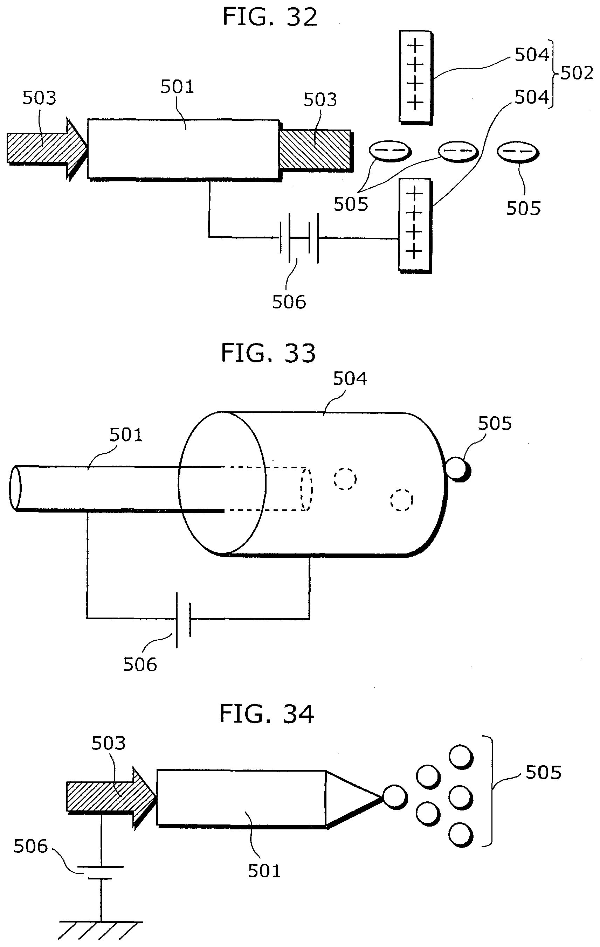

Moreover, FIG. 32 is a schematic diagram of a conventional liquid spray device disclosed in Patent Reference 1. The liquid spray device includes: a nozzle 501 that sprays liquid; a charging unit 502 that generates a high-voltage electric field to charge static electricity to the liquid to be sprayed so that the liquid is atomized; and a high voltage power source 506 that causes the charging unit 502 to perform charging. The charging unit 502 performs electrostatic atomization on a liquid water column 503 to be sprayed from the nozzle 501, by using a charging electrode 504 according to a dielectric charging method, in other words, by passing the liquid water column 503 through the high-voltage electric field. Thereby, the charging unit 502 reduces a size of particles, and sprays the resulting charged fine particle moisture 505.

FIG. 33 is a schematic diagram of the charging unit 502. A portion of the nozzle 501 is inserted in the cylindrical charging electrode 504. The high voltage power source 506 supplies a high voltage to the nozzle 501 as a positive terminal and the charging electrode 504 as a negative terminal, thereby charging the liquid fine particle moisture 505 to be sprayed from the nozzle 501, to have negative charge for the electrostatic atomization. If the moisture is negatively charged, negative ion effect is also achieved.

It is also possible that liquid is mixed with antioxidant such as vitamin C and fungicide and then performs electrostatic atomization on them to be sprayed. Thereby, active oxygen accumulated in air can be eliminated by the antioxidant or sterilized by the fungicide. It is also possible to provide a grounded electrostatic adsorption unit at the end of the charging electrode 504. Thereby, static electricity can adsorb suspended fine particulates and the like in air together with the liquid moisture 505. FIG. 34 is a schematic diagram of the nozzle 501. A high voltage directly applied to the nozzle 501 enables the nozzle 501 itself to serve as the charging unit. Thereby, the nozzle 501 can directly charge deodorant at the same time as spaying.

As described above, the devices performing electrostatic atomization generally charge liquid to have a high potential and spray the liquid to an opposite electrode having a difference of electrical potential (hereinafter, referred to as a "potential difference").

Since to-be-sprayed liquid is applied with a high voltage to have a large amount of electric charge, the conventional liquid spray devices would have the following troubles.

For example, when liquid with a large amount of electric charge is sprayed to structural parts and stored items in a crisper, the structural parts and stored items attached with the sprayed liquid are electrically charged. The charged state is not only the situation of electrostatic induction for conductive objects and charge polarization for nonconductive objects, but also the situation of sheer unbalance between a positive charge amount and a negative charge amount of an object. An object has a larger amount of electric charge, as the object has a greater capacitance, and as a positive charge amount is much greater than a negative charge amount in a charged capacitor.

For example, an object such as a stored item is a nonconductive material such as resin, electric charge is hardly transferred. If such an object is charged once, the object is kept at a high potential for a long time. On the other hand, if the object is a conductive material such as a metal, electric charge is actively transferred. If the surrounding of the object has a high humidity, the electric charge is easily discharged in a short time, as seen in charging phenomenon due to static electricity.

However, in the environment with a low temperature and a low humidity in a refrigerator, for example, if inside of the refrigerator is cooled enough and no action occurs to increase the humidity, for example if storing of vegetables containing a great amount of water or the like or opening and closing of a door is not performed in a long time, electric charge is not discharged from a charged stored item or the like even if the item is a conductive object, and its charge potential is increased to be equal to a potential applied by an electrode. For example, if a voltage is applied to liquid to have a potential of -6 kV, the charge potential of the stored item is increased to approximately -6 kV. Here, as an object such as a charged stored item has a more electrostatic capacity, the object has more electric charge accumulated. Thereby, when a human body touches the charged stored item, the item discharges electric charge. Especially, a conductive object discharges electric charge to a human body in a moment. Therefore, a peak value of the electricity energy is large. A user of a refrigerator never expects to receive an electric shock from items stored in the refrigerator.

Other objects except such stored items cause the same problem. For example, if a crisper case in a crisper is charged, the crisper case generates an electric field and objects in the case have a high potential. For instance, while liquid is applied with a voltage to have a potential of -6 kV, the crisper case, stored items located in the electric field generated by the crisper case, and the electrostatic atomization device itself are at a potential of approximately -6 kV. As a result, all of the sprayed liquid at a potential of -6 kV and the objects in the crisper have the same potential, which reduces energy for atomizing the liquid into fine particles and thereby fails spraying. Therefore, an amount of water attached to the stored items in the crisper is significantly reduced, which reduces sterilization effects and the like. In addition, if wiring or other functional parts are located in the electric field, they are charged to have a high potential, thereby causing erroneous operations or damages of devices.

As in the conventional cases, electric charge of a charged object is easily discharged in an open space at room temperature and room humidity. This tendency is seen especially in conductive objects. However, in the environment having a possibility of low temperature and low humidity like in a refrigerator, spraying of charged liquid would cause the above-described troubles.

Meanwhile, refrigerant used in a refrigeration cycle in refrigerators is recently changed from conventional hydrofluorocarbon (HFC) medium to hydrocarbon (HC) system medium such as isobutene (R600a), in view of preventing ozone depletion and global warming.

However, as HC refrigerants are flammable, leakage of the refrigerants has a risk of flame caused by spark or heat of connection points of electrical parts and arc due to high-voltage application. Therefore, various flame arresting techniques are examined.

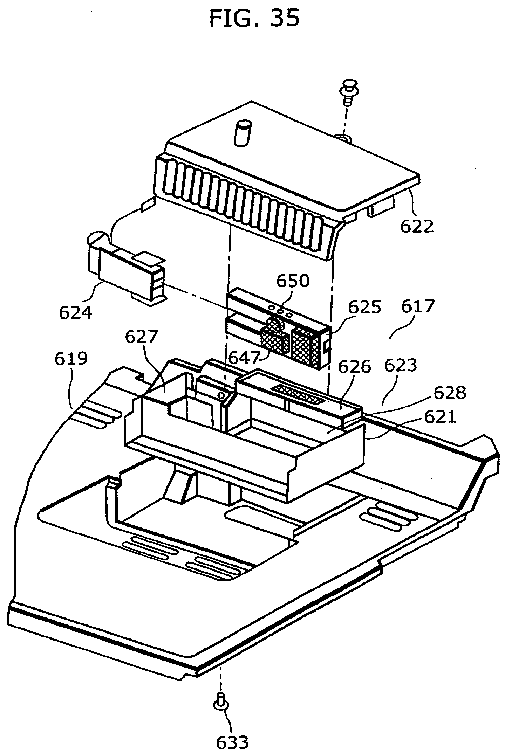

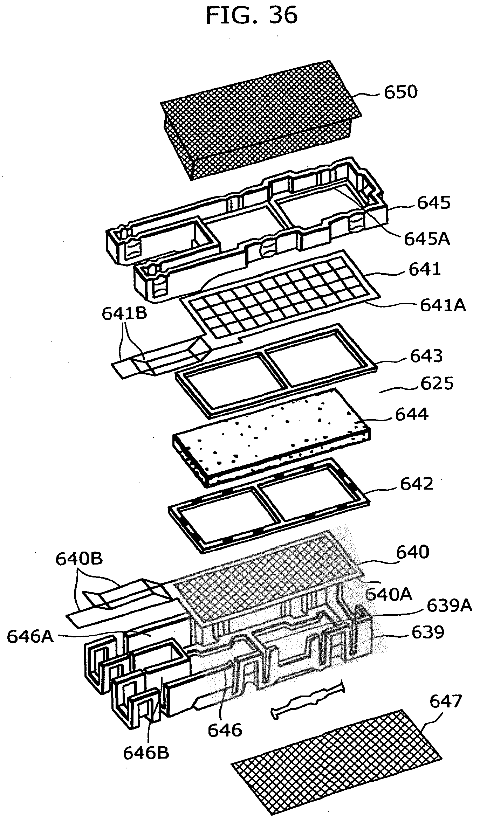

FIG. 35 is a perspective view of a conventional deodorization device disclosed in Patent Reference 2. FIG. 36 is an exploded perspective view of the conventional deodorization device.

As shown in FIGS. 35 and 36, the deodorization device 617 includes a container-shaped case body 621; a cover 622 covering a top opening of the case body 621; a step-up transformer 624 arranged in the case body 621; a photocatalytic unit 625; and an ozonolysis catalyst 626. The case body 621 and the cover 622 form a unit case 623.

In the case body 621, there are formed a transformer chamber 627 and a cool air flow path 628 which are separated by a divider wall. The step-up transformer 624 is arranged in the transformer chamber 627. The photocatalytic unit 625 is arranged in the cool air flow path 628, and the ozonolysis catalyst 626 is arranged in the most downstream of the cool air flow path 628.

The photocatalytic unit 625 includes a first case 639 and a second case 645 that is capable of attaching to the first case 639. The first case 639 contains a first electrode 640, a second electrode 641, spacers 642 and 643, and a photocatalytic module 644.

In the first case 639, a storage recess part 646 is formed. In the storage recess part 646, there are sequentially stored a mesh electrode part 640A of the first electrode 640, the spacer 642, the photocatalytic module 644, the spacer 643, and a mesh electrode part 641A of the second electrode 641. The first case 639 also has terminal arrangement parts 646A and 646B connected to the storage recess part 646. In the terminal arrangement parts 646A and 646B, a terminal part 640B of the electrode 640 and a terminal electrode 641B of the electrode 641 are arranged, respectively. The first case 639 also has a window part 639A. An anti-inflammation metal mesh 647 is adhered to the first case 639 so that the window part 639A is closed from the outside. If the mesh electrode part 640A of the first electrode 640 is stored in the storage recess part 646, the mesh electrode part 640A faces, via the window part 639A, the anti-inflammation metal mesh 647 that is adhered to the window part 639A.

The second case 645 is capable of be engaged to the first case 639 to be mounted on the first case 639. The second case 645 is mounted on the first case 639 in which the first electrode 640, the spacer 642, the photocatalytic module 644, the spacer 643, and the second electrode 641 are sequentially stored. As a result, the photocatalytic unit 625 is assembled. The second case 645 also has a window part 645A. An anti-inflammation metal mesh 650 is adhered to the second case 645 so that the window part 645A is closed from the outside. The mesh electrode part 641A of the second electrode 641 faces the anti-inflammation metal mesh 650 via the window part 645A, when the photocatalytic unit 625 is assembled.

In the deodorization device 617, a space surrounded by the first case 639, the second case 645, and the anti-inflammation metal meshes 647 and 650 serves as a combustion chamber. In a situation where isobutene leaked from the refrigeration cycle device flames in the combustion chamber due to electrical discharge between the fist and second electrodes 640 and 641, the above-described structure can prevent the flame from spreading to the outside of the combustion chamber.

The conventional deodorization device 617 is covered by the anti-inflammation metal meshes, which makes the structure of the conventional deodorization device 617 complicated and large.
[Patent Reference 1] Japanese Unexamined Patent Application Publication No. 2005-270669
[Patent Reference 2] Japanese Unexamined Patent Application Publication No. 2003-106753

### Disclosure of Invention

### Problems that Invention is to Solve

A refrigerator according to the present invention, which includes: a storage compartment that is separated and heat-insulated from another area; an atomization device having an electrode unit which sprays mist into the storage compartment; and a protection unit that improves safety of a user and including a current-limit circuit as set out in the appended claims.

### Brief Description of Drawings

**[****FIG. 1]** FIG. 1 is a cross-sectional side view of a refrigerator according to a first embodiment.
**[****FIG. 2]** FIG. 2 is a cross-sectional side view of a crisper in the refrigerator according to the first embodiment.
**[****FIG. 3]** FIG. 3 shows characteristics of a charge potential of the refrigerator according to the first embodiment.
**[****FIG. 4]** FIG. 4 shows other characteristics of a charge potential of the refrigerator according to the first embodiment.
**[****FIG. 5]** FIG. 5 is a cross-sectional side view of a crisper in a refrigerator according to a second embodiment.
**[****FIG. 6]** FIG. 6 is a cross-sectional side view of a refrigerator according to a third embodiment.
**[****FIG. 7]** FIG. 7 is a cross-sectional side view of a crisper in the refrigerator according to the third embodiment.
**[****FIG. 8]** FIG. 8 is a front view of an atomization device in the refrigerator according to the third embodiment.
**[****FIG. 9]** FIG. 9. is a detailed view of the atomization device in the refrigerator according to the third embodiment.
**[****FIG. 10]** FIG. 10 is a front view of an atomization device in a refrigerator according to.a fourth embodiment.
**[****FIG. 11]** FIG. 11 is a cross-sectional side view of the atomization device in the refrigerator according to the fourth embodiment.
**[****FIG. 12A]** FIG. 12A is a front view of an opening of the atomization device in the refrigerator according to the fourth embodiment.
**[****FIG. 12B]** FIG. 12B is a front view of another opening of the atomization device in the refrigerator according to the fourth embodiment.
**[****FIG. 12C]** FIG. 12C is a front view of still another opening of the atomization device in the refrigerator according to the fourth embodiment.
**[****FIG. 12D]** FIG. 12D is a front view of still another opening of the atomization device in the refrigerator according to the fourth embodiment.
**[****FIG. 13]** FIG. 13 shows a relationship among dimensions of an opening of the atomization device and an amount of sprayed liquid, according to the fourth embodiment.
**[****FIG. 14]** FIG. 14 is a cross-sectional side view of another variation of a protection cover in the refrigerator according to the fourth embodiment.
**[****FIG. 15A]** FIG. 15A is a cross-sectional side view of a crisper in a refrigerator according to a fifth embodiment forming the present invention.
**[****FIG. 15B]** FIG. 15B shows characteristics of an atomization device in the refrigerator according to the fifth embodiment.
**[****FIG. 16]** FIG. 16 is a cross-sectional side view of a crisper in a refrigerator according to a sixth embodiment.
**[****FIG. 17]** FIG. 17 is a block diagram of a high voltage stop unit of an atomization device in the refrigerator according to the sixth embodiment.
**[****FIG. 18]** FIG. 18 is a cross-sectional side view of an atomization device in a refrigerator according to a seventh embodiment.
**[****FIG. 19]** FIG. 19 is a vertical cross-sectional view of a refrigerator according to an eighth embodiment.
**[****FIG. 20]** FIG. 20 is a front view of the refrigerator according to the eighth embodiment.
**[****FIG. 21]** FIG. 21 is a cross-sectional view of the refrigerator taken along line 21-21 of FIG. 20.
**[****FIG. 22]** FIG. 22 is a cross-sectional view of the refrigerator taken along line 22-22 of FIG. 20.
**[****FIG. 23]** FIG. 23 is a detailed view of the refrigerator according to the eighth embodiment.
**[****FIG. 24]** FIG. 24 shows a temperature and discharge current of an atomization electrode in the refrigerator according to the eighth embodiment.
**[****FIG. 25]** FIG. 25 shows a temperature of an electrode of an atomization device according to the eighth embodiment.
**[****FIG. 26]** FIG. 26 shows discharge energy of the atomization device according to the eighth embodiment.
**[****FIG. 27]** FIG. 27 shows discharge energy of the atomization device according to the eighth embodiment.
**[****FIG. 28]** FIG. 28 is a cross-sectional view of a refrigerator according to a ninth embodiment.
**[****FIG. 29]** FIG. 29 is a cross-sectional view of a refrigerator according to a tenth embodiment.
**[****FIG. 30]** FIG. 30 is a cross-sectional view of the refrigerator taken along line 30-30 of FIG. 29.
**[****FIG. 31]** FIG. 31 is a cross-sectional view of the refrigerator taken along line 31-31 of FIG. 30.
**[****FIG. 32]** FIG. 32 is a schematic block diagram of a conventional liquid spray device.
**[****FIG. 33]** FIG. 33 is a schematic block diagram of another conventional liquid spray device.
**[****FIG. 34]** FIG. 34 is a schematic block diagram of still another conventional liquid spray device.
**[****FIG. 35]** FIG. 35 is a perspective view of a conventional deodorization device.
**[****FIG. 36]** FIG. 36 is an exploded perspective view of the conventional deodorization device.

### Numerical References

- 101: refrigerator
- 102: main body
- 103A: divider
- 103B: divider
- 103C: divider
- 104: door
- 105: refrigerator compartment
- 106: switch compartment
- 107: crisper
- 108: freezer compartment
- 111: compressor
- 112: evaporator
- 113: ventilation flue
- 114: divider
- 115: electrostatic atomization device (atomization device)
- 116: crisper case
- 121: high voltage circuit unit
- 122: atomization electrode
- 123: opposite electrode
- 124: cooling pin
- 125A: case
- 125B: case
- 126: opening
- 127: error determination unit
- 128: humidity detection unit
- 129: high voltage stop unit
- 131: wiring
- 132: reference potential unit
- 133: switching power IC
- 134: power circuit unit
- 135: discharge resistor
- 136: reference potential unit
- 201: refrigerator
- 204C: crisper door
- 207: crisper
- 215: atomization device
- 221: high voltage generation unit
- 222: atomization electrode
- 223: opposite electrode
- 225: case
- 225A: opening
- 225B: primary opening
- 225C: auxiliary opening
- 225D: lattice opening
- 226: opening
- 228: protection cover
- 231: current-limit circuit
- 241: high voltage stop unit
- 242: magnet
- 243: power unit
- 244: control unit
- 251: water flowout path
- 300: refrigerator
- 301: heat-insulating main body
- 307: crisper (storage compartment)
- 331: electrostatic atomization device (atomization device)
- 332: spray port
- 334: metal pin
- 335: atomization electrode
- 336: opposite electrode
- 337: case
- 338: opening
- 339: atomization unit
- 346: refrigerator control circuit
- 360: high voltage generation circuit
- 361: step-up transformer
- 362: discharge voltage detection circuit
- 363: discharge current detection circuit
- 364: high voltage output control circuit
- 365: discharge current value determination circuit
- 366: current fuse
- 367: high voltage ON/OFF circuit
- 370: electricity connection unit (connection unit)
- 371: resin
- 372: divider

### (First Embodiment)

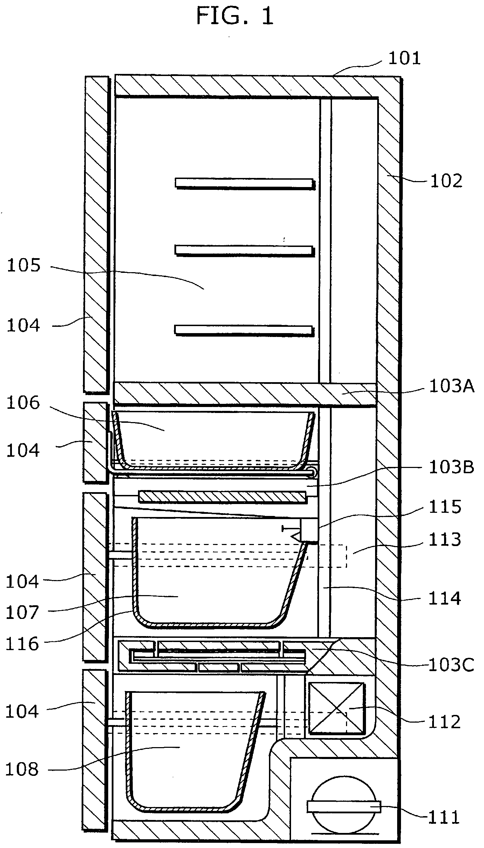

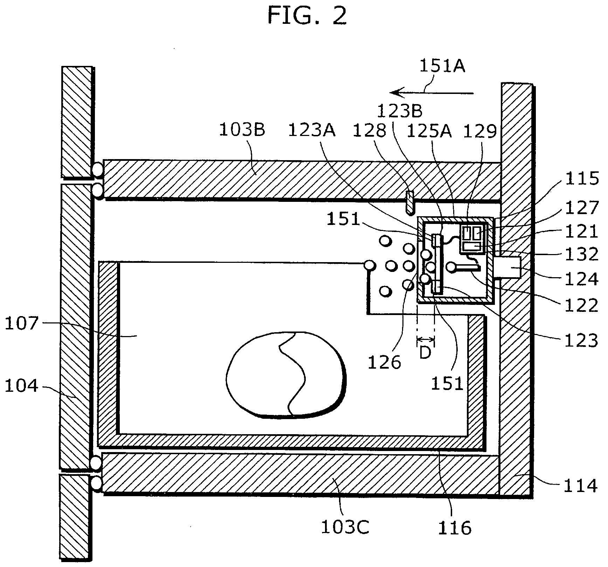

FIG. 1 is a cross-sectional side view of a refrigerator 101 according to a first embodiment. FIG. 2 is a cross-sectional side view of a crisper 107 in the refrigerator 101. The refrigerator 101 includes: a main body 102; dividers 103A, 103B, and 103C which separate inside of the main body 102 into a plurality of areas; and doors 104 that close the areas. The areas are heat-insulated from one another. The areas serve as a refrigerator compartment 105, a switch compartment 106, a crisper 107, and a freezer compartment 108, each of which is a storage compartment having a different temperature. The crisper 107 is cooled to have a temperature of around 5°C.

The refrigerator 101 has a refrigeration cycle for cooling these storage compartments. The refrigeration cycle includes: a compressor 111; a condenser; a decompressor such as an expansion valve or a capillary tube; an evaporator 112; tubes connecting these devices; and refrigerants circulating in these devices.

Low-temperature air generated by the evaporator 112 is transported through a ventilation flue 113 to each of the storage compartments in which the air is heat-exchanged and then collected through the ventilation flue 113 to the evaporator 112. The ventilation flue 113 is heat-insulted from the storage compartments by a divider 114.

In the crisper 107, an electrostatic atomization device 115 is provided to atomize liquid into fine particles to be sprayed. The electrostatic atomization device 115 sprays the resulting fine mist into the crisper case 116 in a direction 151A.

The electrostatic atomization device 115 serving as an atomization device includes: a case 125A; a high voltage circuit unit 121 having a reference potential unit; an atomization electrode 122 connected to the reference potential unit of the high voltage circuit unit 121; an opposite electrode 123 to which the high voltage circuit unit 121 applies a high voltage; and a cooling pin 124 into which the atomization electrode 122 is inserted to be connected. The case 125A surrounds the high voltage circuit unit 121, the atomization electrode 122, the opposite electrode 123, and the cooling pin 124. The case 125A has an opening 126 through which sprayed liquid passes. The reference potential unit is at a reference potential such as a ground potential of 0 V, for example. The opposite electrode 123 is arranged in the direction 151A from the atomization electrode 122. The atomization unit has at least the atomization electrode 122 that is a tip of the atomization unit which is hereinafter referred to as an atomization tip. If the atomization unit further has the opposite electrode 123 in addition to the atomization electrode 122, it is easy to set a direction of spraying mist and adjust a voltage of the high voltage circuit unit 121 for the mist spray.

An electrode unit refers to the atomization electrode 122 provided in the atomization device. In the first embodiment, the electrode unit further includes the opposite electrode 123. The high voltage circuit unit 121 and the electrode unit form the atomization device that sprays mist to the storage compartment.

The cooling pin 124 is berried in the divider 114 and cooled to have a temperature of approximately -5°C by cool air provided from the ventilation flue 113. The atomization electrode 112 is also cooled via the cooling pin 124 to have a temperature of approximately -5°C by heat transfer from the cool air. The crisper 107 has a temperature of around 5°C, having a difference of approximately 10°C from the temperature of the cooling pin 124 and the atomization electrode 122. Therefore, when water evaporated from vegetables stored in the crisper 107 or the like keeps a humidity to be equal to or more than a predetermined humidity, the atomization electrode 122 causes dew condensation. A potential of water of the dew condensation is equal to a reference potential of the atomization electrode 122.

The opposite electrode 123 is applied with a voltage to have a high potential of +6kV, having a potential difference of 6kV from the reference potential of the water of the dew condensation of the atomization electrode 122. Rayleigh fission caused by the electrostatic energy atomizes the dew condensation water into fine particles of several nanometers, which are sprayed into the crisper 107.

The fine sprayed liquid sprayed by the above-mentioned electrostatic atomization contains a large number of OH radicals, which causes a very small amount of ozone. The OH radicals and the small amount of ozone produce effects such as bacterial killing, sterilization, and antibacterial effect. The effects cause oxidation decomposition to eliminate agricultural chemicals from vegetables in the crisper 107, and increase nutritive substances such as vitamin C of the vegetables.

If the ozone has a low concentration, the above-mentioned effects can be achieved. On the other hand, if the concentration of the ozone exceeds 0.03 ppm, smell of the ozone discomforts a user and the ozone deteriorates resin used in the storage compartment. In the first embodiment, although a voltage applied to the opposite electrode 123 is significantly high as +6 kV, a discharge current value is controlled to be 1 µA to 2 µA, which does not cause ozone having a concentration that would cause the above harmful effects.

Moreover, in the first embodiment, the atomization electrode 122 is at a reference potential of 0 V. Thereby, a positive charge amount is equal to a negative charge amount in the sprayed liquid, which allows so-called dielectric polarization to generate OH radicals and the like. A balance between the positive and negative charge amounts in an object such as a stored item attached with the sprayed liquid is therefore not easily lost, and the sprayed mist has the reference potential and thereby does not take charge immediately. As a result, it is possible to keep the vegetables fresh as described above.

Thereby, the first embodiment has a protection unit that causes the opposite electrode 123 to be applied with a high voltage and the atomization electrode 122 to be at a reference potential. Thereby, sprayed mist has the reference potential. Therefore, the mist is sprayed, so that items stored in the crisper 107 such as vegetables and the crisper case 116 in the crisper 107, to which the sprayed mist is attached, have the reference potential without being charged.

In short, the protection unit in the first embodiment is used for an atomization method of spraying mist having a reference potential.

In other words, the refrigerator 101 according to the first embodiment includes the protection unit to prevent portions attached to sprayed mist from being charged. With the structure, when the user touches stored items, the user does not feel electric current. As a result, it is possible to prevent the problem of the conventional techniques that, when a user touches a charged item stored in a refrigerator, the stored item discharges to a body of the user in a moment thereby producing a large peak value of electrical energy so that the user receives electric shock from the stored item.

As described above, in the first embodiment, the atomization electrode 112 is at a potential of 0 V and the opposite electrode is at a potential of 6 kV. However, even if the atomization electrode 122 is applies with a voltage to have a potential of -6 kV and the opposite electrode 123 is set to be at the reference potential, a potential difference between the two electrodes is the same 6 kV. However, in sprayed liquid that is attached to the atomization tip before atomization, a negative charge amount significantly exceeds a positive charge amount. As a result, a balance between the negative and positive charge amounts in objects such as stored items attached with the sprayed liquid is biased to be negative. More specifically, since sprayed mist is at a negative potential, the stored items with the sprayed mist also have a negative potential. This causes troubles such as erroneous operations due to generation of an electric field and discharges to human body. However, the first embodiment prevents the troubles, by setting the atomization electrode 122 to be at a reference potential.

The electrostatic atomization device 115 also has a possibility of charging stored items and the like. For example, when liquid is attached to the opposite electrode 123 and a conductive stored item such as an aluminum can is placed near the opposite electrode 123 in the crisper 107, the following phenomenon occurs.

When the opposite electrode 123 is applied with a high voltage to have a potential of +6 kV, a potential of the aluminum can is substantially equal to the reference potential. As a result, discharge phenomenon between the opposite electrode 123 and the aluminum can allows liquid to be sprayed as fine particles. The sprayed liquid has a large amount of electric charge. When the sprayed liquid is attached to the aluminum can, the aluminum can is charged. Here, if the crisper 197 has certain humidity, the electric charge of the aluminum can is immediately discharged. However, if the refrigerator does not store vegetables and the like containing a large amount of water, or if a door is not opened and closed during a log time, in other words, in the environment with a low humidity, the electric charge accumulated in the aluminum can is hold in a loge time.

In order to address the above situation, in the refrigerator 101 according to the first embodiment, first, a high voltage having a positive potential is applied to the opposite electrode 123. Thereby, in a situation where a stored item is applied with a high voltage having a positive potential, it is possible to reduce a potential difference between a human body that is easily charged positively and the electric charge accumulated in the stored item. As a result, it is possible to reduce electric charge flowing to the human body touching the stored item.

The refrigerator 101 according to the first embodiment has a structure allowing no conductive stored item to be placed near the opposite electrode 123. With the structure, stored items do not attract, by gravitation, liquid attached to the opposite electrode 123. As a result, the liquid is not sprayed to the outside of the case 125A. Therefore, in the first embodiment, a distance D between the opposite electrode 123 and the case 125A is set to be a certain length, so that a distance between stored items and the opposite electrode 123 is definitely equal to or longer than the distance D. In addition, the opening 126 has a slit shape so that a part of a stored item does not enter the case 125A from the opening 126.

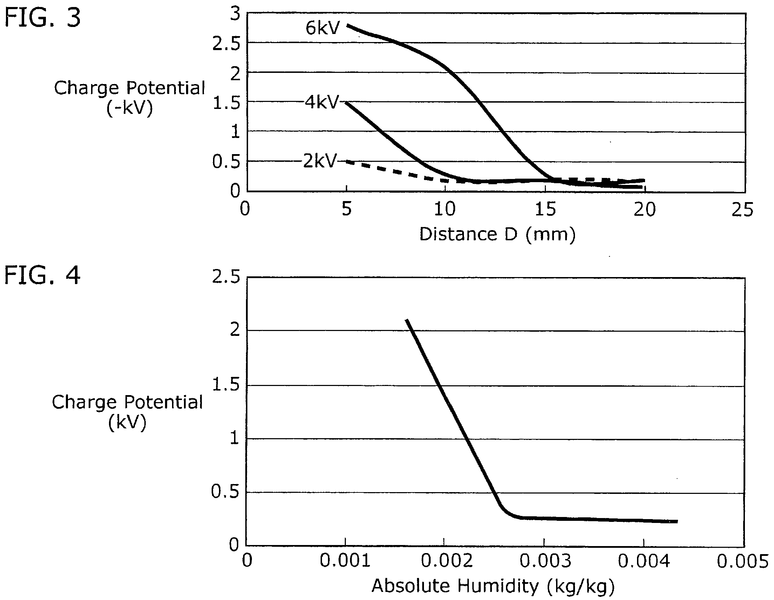

FIG. 3 shows a relationship between (a) a distance D between the opposite electrode 123 and the case 125A and (b) a charge potential of the stored item, in the refrigerator 101 according to the first embodiment. As shown in FIG. 3, if the distance D is equal to or longer than 15 mm, a conductive stored item has a charge potential of nearly 0 V, which means that the atomization electrode 122 does not spray charged liquid. Based on the relationship shown in FIG. 3, when the refrigerator 101 of the first embodiment has the opposite electrode 123 that is applied with a high voltage of + 6 kV, the distance D between the opposite electrode 123 and the case is set to be 15 mm. Here, a temperature and a relative humidity in the crisper 107 are 5°C and 30%, respectively. The distance D is determined depending on a voltage applied to the opposite electrode 123. As shown in FIG. 3, when a voltage applied to the opposite electrode 123 is 4 kV, the distance D is set to be approximately 10 mm, and when the applied voltage is 2 kV, the distance D is set to be approximately 5 mm, so that a potential of stored items is decreased.

It is also possible that a nonconductive material 151 such as epoxy resin is provided to the entire surface of the opposite electrode 123 or a surface 123A that faces in the direction 151A of spraying liquid. Thereby, the liquid is attached not to the opposite electrode 123 but to the nonconductive material 151. Since electric charge is hardly transferred in insulating materials, the above structure can significantly reduce electric charge transferred to the liquid. Therefore, the sprayed liquid does not have a large amount of electric charge. Moreover, the nonconductive material 151 is not necessarily provided to an opposite side of the opposite electrode 123 in the direction 151A, in other words, to a surface 123B of the opposite electrode 123 closer to the atomization electrode 122. In this situation, the surface 123B of the opposite electrode 123 is exposed and therefore does not decrease efficiency of discharge between the opposite electrode 123 and the atomization electrode 122. Furthermore, the nonconductive material 151 does not need to contact the opposite electrode 123. The nonconductive material 151 may be arranged between the surface 123A of the opposite electrode 123 and the opening 126, and near the surface 123A. This means that the nonconductive material 151 is closer to the opposite electrode 123 than to the opening 126. In this situation, however, it is necessary to locate the nonconductive material 151 in order not to block spray from the opposite electrode 122 in normal operations.

Moreover, by monitoring a discharge current flowing in the opposite electrode 123, it is possible to distinguish (a) a normal state where water attached to the atomization electrode 122 is sprayed from (b) an abnormal state where liquid attached to the opposite electrode 123 is sprayed. In the normal state where water attached to the atomization electrode 122 due to dew condensation is sprayed, a discharge current flowing in the opposite electrode 123 has a value of approximately 1 µA to 2 µA. In the abnormal state where liquid attached to the opposite electrode 123 is sprayed, a discharge current flowing in the opposite electrode 123 has a value of approximately 0.3 µA to 0.8 µA. Furthermore, in a state where water is attached to the atomization electrode 122 due to dew condensation and liquid is attached to the opposite electrode 123 at the same time, a discharge current flowing in the opposite electrode 123 has a value equal to or more than 2 µA. As described above, the sprayed state can be examined by detecting the discharge current flowing in the opposite electrode 123. A current value of the opposite electrode 123 is detected by an error determination unit 127 including a current detection circuit, a microcomputer, and the like. When the error determination unit 127 detects a current value that is caused by unexpected attachment of liquid to the opposite electrode 123, application of a high voltage to the opposite electrode 123 is stopped. However, a current value of the opposite electrode 123 varies depending on the structure of the electrostatic atomization device 115. Therefore, the current value is not limited to the above. A range of a current value of the opposite electrode 123 attached with liquid is measured for each of different cases where liquid is attached to various structures of the electrostatic atomization device 115. Based on the measurement, a reference value used by the error determination unit 127 is determined.

The refrigerator 101 may include a humidity detection unit 128 that detects a humidity in the crisper 107. Only when the humidity in the crisper 107 is equal to or less than a predetermined humidity, the opposite electrode 123 is applied with a high voltage. When the humidity in the crisper 107 is higher than the predetermined humidity, application of a high voltage to the opposite electrode 123 is stopped. Even if conductive stored items are charged, a humidity equal to or higher than a certain humidity allows electric charge accumulated in the conductive stored items to be discharged in a moment. This discharge phenomenon is significantly influenced by a humidity of the conductive stored items, the crisper case 116, and the like. Therefore, the humidity detection unit 128 in the refrigerator 101 according to the first embodiment detects an absolute humidity in the crisper 107.

FIG. 4 shows a relationship between an absolute humidity and a charge potential of a stored item in the refrigerator 101. FIG. 4 shows a charge potential of a conductive stored item after charged sprayed liquid is sprayed to the conductive stored item for 30 minutes in environments of various absolute humidity. During spraying, sprayed liquid accumulates electric charge to the conductive stored item, and at the same time, the conductive stored item itself discharges. When an absolute humidity reaches equal to or more than a predetermined humidity, an amount of the discharges to the outside exceeds an amount of the accumulated charge. As a result, a charge potential of the conductive stored item is nearly 0 V, which means the conductive stored item is not actually charged. As shown in FIG. 4, when the absolute humidity is equal to or more than 0.003 kg/kg, a charge potential is nearly 0 V.

Based on the above observation, the humidity detected by the humidity detection unit 128 is notified to the high voltage stop unit 129 via a microcomputer or the like. When the detected humidity is equal to or less than an absolute humidity of the predetermined humidity of 0.003 kg/kg, the high voltage stop unit 129 stops applying a high voltage to the opposite electrode 123. Here, the predetermined humidity is not necessary to have a value that results in a charge potential of approximately 0 V. The value may be more than 0.003 kg/kg as far as the value does not cause various troubles.

In the first embodiment, liquid is attached to the atomization electrode 122 to have a reference potential, and a high voltage of +6 kV is applied to the opposite electrode 123 to produce a potential difference of 6 kV between the atomization electrode 122 and the opposite electrode 123. As far as spraying is possible, the potential difference is not necessarily 6 kV and may be any desired value.

It should be noted that it has been described in the first embodiment that the opposite electrode 123 is provided and a high voltage is applied to the opposite electrode 123 to be positive, thereby spraying mist. However, even if there is no opposite electrode 123, it is possible to spray mist at a reference potential of 0 V in the following situation. When a portion, which is able to be applied with a voltage to have a more positive potential than a potential of the atomization electrode, exists closer to the crisper 107 in a direction of spraying, the portion is applied with a voltage of + 6kV in order to spray the above mist.

It is also possible, for example, to set a potential of the atomization electrode 122, namely, a potential of liquid, to -2 kV, and set a potential of the opposite electrode 123 to +4 kV, thereby producing a potential difference of 6 kV. In this situation, a balance between positive charge amount and negative charge amount in sprayed liquid is biased to be negative. Therefore, a balance between positive charge amount and negative charge amount in objects such as stored items attached with the sprayed liquid is also biased to be negative and the objects are charged. However, since the potential of - 2kV is relatively small, the objects such as stored items do not cause various troubles. In the above case, an amount of OH radicals in the sprayed liquid is more than that in the situation where a potential of liquid, namely, a potential of the atomization electrode 122 is set to be a reference potential.

The refrigerator 101 according to the first embodiment includes an electrostatic atomization device 115 that atomizes liquid into fine particles and sprays the fine particles. The electrostatic atomization device 115 has the protection unit that causes a potential of liquid attached to the atomization electrode 122 to have a reference potential. When a high voltage is applied to the opposite electrode 123 that is arranged in the direction 151A of spraying liquid, the high voltage is not applied directly to the liquid. Therefore, it is possible to minimum an amount of electric charge in the sprayed liquid and to prevent the sprayed mist from charging structural parts and stored items contacting the atomized mist. Thereby, a structural part of the refrigerator 101, such as the crisper 107, does not generate an electric field due to the electric charge. As a result, erroneous operations of the electrostatic atomization device 115 and other control devices can be prevented. In addition, since stored items are not charged, the stored items do not discharge electric charge to a user touching the stored items, so that the user can use the refrigerator 101 feeling safely.

As described above, a high voltage having a positive potential is applied to the opposite electrode 123. Thereby, in a situation where sprayed liquid is charged, the charge is positive. Therefore, it is possible to reduce a potential difference between the sprayed liquid and a user's human body that is easily charged positively. In other words, even if sprayed mist is charged, the mist is positively charged. Thereby, it is possible to reduce a possibility that the user touching a stored item attached with the sprayed mist feels discharge from the stored item.

As described above, the electrostatic atomization device 115 is stored in the case 125A having an opening at a region through which sprayed liquid passes. The protection unit is provided between the opening 126 of the case 125A and the opposite electrode 123, with a predetermined distance. This arrangement can prevent that conductive stored items having a potential almost equal to the reference potential is stored in vicinity of the opposite electrode 123. As a result, when the opposite electrode 123 is attached with liquid unexpectedly, it is possible to prevent the sprayed liquid from emitting to the conductive stored items and charging the items.

It should be noted that it has been described that the protection unit in the first embodiment causes sprayed mist itself to have a reference potential to prevent the case 125 in the crisper from being charged. However, it is also possible, for example, that the case 125A is a conductive material member or a part of the case 125A is a conductive material member, and that such conductive material member is connected to the reference potential unit 132. In the above case, regardless of electric charge of sprayed mist, it is possible to prevent the case 125A and stored items such as vegetables stored in the case 125A from being charged. Moreover, even if the electric field generated by the opposite electrode 123 applied with a high voltage causes the case 125A to be charged to have a potential equal to a potential of the opposite electrode 123, the electric field does not extend from the inside of the case 125A. As a result, the first embodiment can prevent both of charging caused by sprayed liquid and charging caused by an electric field.

As described above, the nonconductive material 151 contacts or is located near a predetermined part of the opposite electrode 123. With the structure, in a situation where liquid is attached to the opposite electrode 123 unexpectedly, transfer of electric charge from the opposite electrode 123 to the liquid is reduced and emission of charged sprayed liquid is blocked. As a result, in a situation where liquid is sprayed from the opposite electrode 123 to the crisper 107, an amount of electric charge in structural parts and stored items is small.

As described above, the error determination unit 127 detects a current value of current flowing in the opposite electrode 123, and if the current value is within a predetermined range, determines that a current state is the abnormal state where liquid is sprayed from the opposite electrode 123. Thereby, it is possible to distinguish the normal state where liquid is sprayed from the atomization electrode 122, from the abnormal state where liquid is sprayed form the opposite electrode 123 to conductive stored items. If the abnormal state is determined, spraying of the liquid is stopped to prevent the liquid from charging structural parts and stored items.

As described above, the humidity detection unit 128, which is provided in the atomization device 107 that is a space where the electrostatic atomization device 115 is arranged, detects a humidity of the space. If the humidity detected by the humidity detection unit 128 is equal to or less than a predetermined value, the high voltage stop unit 129 stops applying a high voltage to the electrostatic atomization device 115. Thereby, the electrostatic atomization device 115 is driven only at a high humidity by which charged objects easily discharge electric charge. In a situation where charged sprayed liquid is generate, charging to structural parts and stored items can be suppressed to be occur in a moment.

### (Second Embodiment)

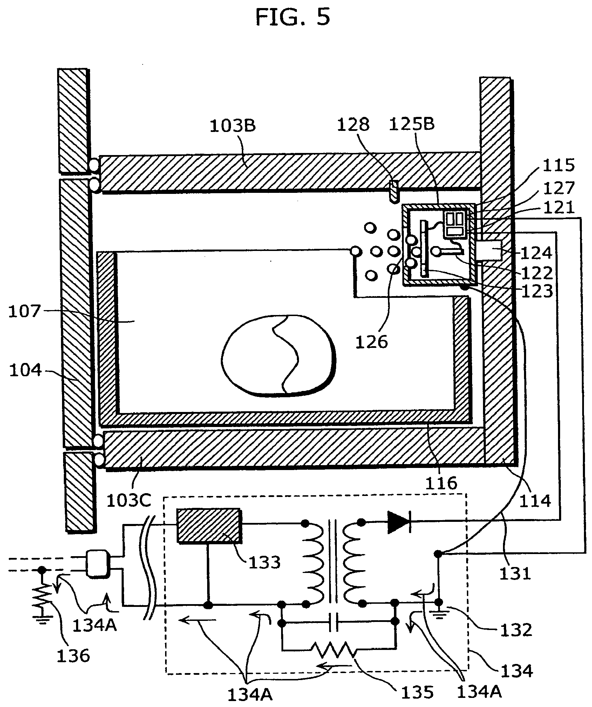

FIG. 5 is a cross-sectional side view of the crisper 107 in a refrigerator according to a second embodiment.

The common parts in the structure and techniques between the first embodiment and the second embodiment are not described in detail again in the second embodiment. In addition, if any of the techniques described in the first embodiment can be applied in the second embodiment, any combination of (a) the techniques and the structure described in the first embodiment and (b) those of the second embodiment is possible.

In a refrigerator shown in FIG. 5, it is possible that the atomization electrode 122 and the opposite electrode 123 are applied with the same voltages as those applied in the first embodiment.

In the first embodiment, it has been described that the protection unit prevents sprayed liquid from charging stored items and the like. In the second embodiment, however, a protection unit prevents an electric field from charging stored items and the like, because a strong electric field would be generated even outside the electrostatic atomization device 115 when a very high voltage exceeding 10 kV, for example, is applied to the opposite electrode 123.

Electric charge generated by an electric field causes electrostatic induction in conducive objects, and dielectric polarization in nonconductive objects. Electric charge in a conductive object caused by electrostatic induction immediately disappears, by stopping application of a high voltage to the opposite electrode 123. However, electric charge in resin caused by dielectric polarization is kept for a ling time even if the application of a high voltage is stopped. The case 125A provided in the general crisper 107 and stored materials stored in the crisper 107 are made of resin that is a nonconductive material. Therefore, if they are charged by influence of an electric field, the electric charge is kept for a long time. For example, various resin structural parts such as the divider 103B serving as a ceiling of the crisper 107, the divider 114 at a rear side, which surround the electrostatic atomization device 115 and are made of resin, and the ventilation flue 113, would be charged by an electric field generated by the electrostatic atomization device 115.

If these structural parts are charged, they generate secondary electric fields in which objects have a high potential. Here, it is assumed that liquid is applied with a voltage to have a potential of + 6kV, and that the crisper case 125A, stored items such as vegetables in an electric field generated by the crisper, the electrostatic atomization device serving as an atomization device are at a potential of approximately +6 kV. Under the above assumption, all of the sprayed liquid at a potential of +6 kV and the objects in the crisper have the same potential. This reduces energy for atomizing liquid into fine particles, and thereby the liquid would not be sprayed. Therefore, an amount of water attached to the stored items in the crisper is significantly reduced, which reduces sterilization effects and the like. In addition, if wiring or other functional parts are located in the electric field, they are charged to have a high potential, thereby causing erroneous operations or damages of devices.

If all structural parts having a possibility of being charged are made of conductive materials at a reference potential, troubles due to electric charge are prevented. However, if various structural parts are made of conductive materials, the manufacturing is costly.

Therefore, in order to prevent generation of an electric field, the case 125B is made of a conductive material and connected to the reference potential unit 132. Various structural parts such as the divider 103B serving as a ceiling of the crisper 107, the divider 114 at a rear side, and the ventilation flue 113, which surround the electrostatic atomization device 115, are made of insulating materials such as resin. Here, at least a part of the case 125B is made of a conductive member that is a conductive material. The conductive member is connected to the reference potential unit 132, in other words, is grounded to have a potential of O V, which forms a restriction unit that prevents the structural parts from being charged.

In other words, even if a portion facing a side to which mist is sprayed is charged, the protection unit according to the second embodiment can reduce the electric charge.

In FIG. 5, the case 125B is made of conductive resin having resistance of approximately 10¹¹ Q at least on the inside surface. The case 125B is connected to the reference potential unit 132 via wiring 131. The reference potential unit 132 is at a potential equal to a potential of a secondary ground of a switching power circuit unit 134 that includes a switching power integral circuit (IC) 133. A discharge resistor 135 is connected between a primary side and a secondary side of the switching power circuit unit 134, and leaked current from a high-potential side is discharged to the reference potential unit 136 at the primary side along a discharge path 134A shown in FIG. 5.

With the above structure, an electric field generated by the electrostatic atomization device 115 is shielded by the case 125B not to be leaked to the outside of the case 125B.

It should be noted that it has been described in the second embodiment that the crisper case 116 is made of conductive resin having a resistance of approximately 10¹¹ Ω on the surface. However, the surface resistance value is not limited to the above as far as the crisper case 116 is electrostatically conductive. The case 116 may be made of a metal.

As described above, the case 125B connected to the reference potential unit 132 allows an electric field to be generated only in the case 125B. As a result, it is possible to present an electric field from extending to the outside of the electrostatic atomization device 115, and suppress troubles caused by the electric field.

### (Third Embodiment)

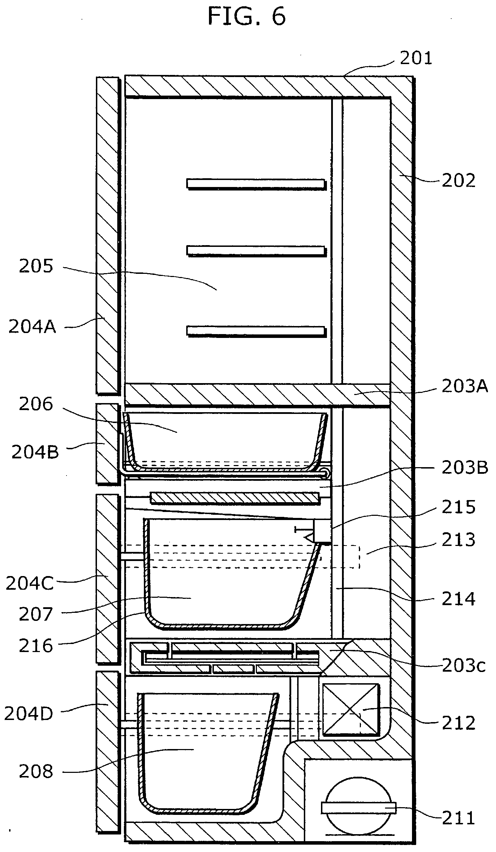

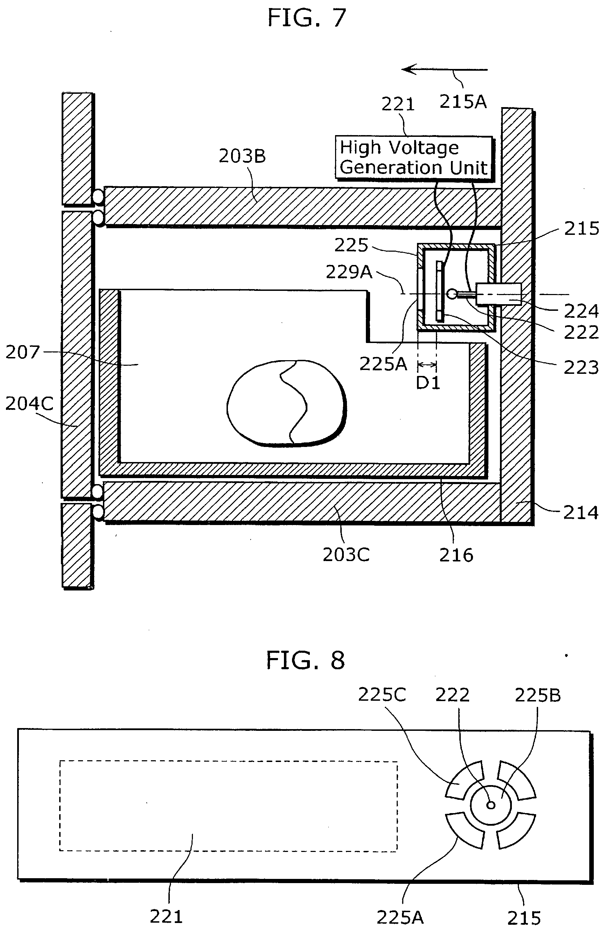

FIG. 6 is a cross-sectional side view of a refrigerator 201 according to a third embodiment. FIG. 7 is a cross-sectional side view of a crisper 207 in the refrigerator 201.

The common parts in the structure and techniques between the already-described first and other embodiments and the third embodiment are not described in detail again in the third embodiment. In addition, if any of the techniques already described in the first and second embodiments can be applied in the third embodiment, any combination of (a) the techniques and the structure already described in the above embodiments and (b) those of the third embodiment is possible.

The refrigerator 201 includes: a main body 202; dividers 203A, 203B, and 203C which divide the inside of the main body 202 into four storage compartments; and four doors 204A, 204B, 204C, and 204D that close the respective four storage compartments. The four storage compartments are separated and heat-insulated from one another. The compartments are called, from top, a refrigerator compartment 205, a switch compartment 206, a crisper 207, and a freezer compartment 208. The compartments have different temperatures. The crisper 207 is cooled to have a temperature of around 5°C.

The refrigerator 201 further includes a refrigeration cycle in order to cool the storage compartments. The refrigeration cycle includes: a compressor 211; a condenser; a decompressor such as an expansion valve or a capillary tube; an evaporator 212; tubes connecting these devices; and refrigerants connecting these devices.

Low-temperature air generated by the evaporator 212 is transported through a ventilation flue 213 to each of the storage compartments in which the air is heat-exchanged and then collected through the ventilation flue 213 to the evaporator 212. The ventilation flue 213 is heat-insulted from the storage compartments by a divider 214.

In the crisper 207, an electrostatic atomization device 215 is provided to atomize liquid into fine particles to be sprayed. The electrostatic atomization device 215 sprays the resulting fine mist into the crisper case 216 in a direction 215A.

The atomization device 215 serving as an electrostatic atomization device includes: a high voltage generation unit 221; an atomization electrode 222 connected to a reference potential unit of the high voltage generation unit 221; an opposite electrode 223 to which the high voltage generation unit 221 applies a high voltage; a cooling pin 224 into which the atomization electrode 222 is inserted to be connected; and a case 225 serving as a protection unit that surrounds the above elements. The case 225 has an opening 225A through which sprayed liquid passes. The opposite electrode 223 is arranged in the direction 215A from the atomization electrode 222. The reference potential unit is at a reference potential such as a ground potential of 0 V, for example.

The cooling pin 224 is berried in the divider 214 and cooled to have a temperature of approximately -5°C by cool air provided from the ventilation flue 213. The atomization electrode 222 is also cooled via the cooling pin 224 to have a temperature of approximately -5°C by heat transfer from the cool air. The crisper 207 has a temperature of around 5°C, having a difference of approximately 10°C from the temperature of the cooling pin 224 and the atomization electrode 222. Therefore, when water evaporated from vegetables stored in the crisper 207 or the like keeps a humidity to be equal to or more than a predetermined humidity, the atomization electrode 222 causes dew condensation. A potential of water of the dew condensation is equal to a reference potential of the atomization electrode 222.

The opposite electrode 223 is applied with a voltage to have a high potential of +7 kV, having a potential difference of 7 kV from the reference potential of the water of the dew condensation of the atomization electrode 222. Rayleigh fission caused by the electrostatic energy atomizes the dew condensation water into fine particles of several nanometers, which are sprayed into the crisper 207. The atomization electrode 222 and the opposite electrode 223 form an electrode unit. The high voltage circuit unit 221 and the electrode unit form an atomization device that sprays mist to the storage compartment.

The opposite electrode 223 is made of a ring-shaped metal plate surrounding a center axis of the atomization electrode 222. This shape allows liquid forming dew condensation on the atomization electrode 222 to receive electrostatic energy homogeneously. In addition, liquid sprayed from the atomization electrode 222 is emitted to the opposite electrode 223 in the direction 215A. The atomized liquid is homogeneously sprayed into the crisper 207 mainly through the inside of the ring. By changing the shape of the opposite electrode 223, it is possible to adjust a direction of spraying the liquid.

It should be noted that the shape of the opposite electrode 223 is not limited to the circular ring, but may be any other shape such as an elliptical ring, a rectangular ring, and other polygonal ring. In the third embodiment, although the opposite electrode 223 has been described to have a ring shape so that sprayed liquid is spread in the crisper 207 as homogenously as possible, the opposite electrode 223 may have any various shape by which a direction of spraying liquid can be adjusted.

The fine liquid sprayed by the above-mentioned electrostatic atomization contains a large number of OH radicals, which causes a very small amount of ozone. The OH radicals and the small amount of ozone produce effects such as bacterial killing, sterilization, and antibacterial effect. The effects causes oxidation decomposition to eliminate agricultural chemicals from vegetables in the crisper 207, and increase nutritive substances such as vitamin C of the vegetables

If the ozone has a low concentration, the above-mentioned effects can be achieved. On the other hand, if the concentration of the ozone exceeds 0.03 ppm, smell of the ozone discomforts a user and the ozone deteriorates resin used in the storage compartment. In the third embodiment, although a voltage applied to the opposite electrode 223 is significantly high as +7 kV, a discharge current value is controlled to be 1 µA to 2 µA, which does not cause ozone having a concentration that would cause the above harmful effects.

Moreover, in the third embodiment, the atomization electrode 222 is at a reference potential of 0 V. Thereby, a positive charge amount is equal to a negative charge amount in the sprayed liquid, which allows so-called dielectric polarization to generate OH radicals and the like. A balance between the positive and negative charge amounts in an object such as a stored item attached with the sprayed liquid is therefore not easily lost, and the sprayed mist does not take charge immediately. As a result, it is possible to keep the vegetables fresh as described above.

Thereby, after spayed liquid is attached to a stored item or the like, a positive charge amount is equal to a negative charge amount in the stored item, which prevents the stored item from being charged.

Even if the atomization electrode 222 is applies with a voltage to have a potential of -7 kV and the opposite electrode 223 is set to be at the reference potential, a potential difference between the two electrodes is the same 7 kV. However, in sprayed liquid, a negative charge amount significantly exceeds a positive charge amount. As a result, a balance between the negative and positive charge amounts in objects such as stored items attached with the sprayed liquid is biased to be negative. More specifically, the stored items have a negative potential, which causes troubles such as erroneous operations due to generation of an electric field and discharges to human body. However, by setting the atomization electrode 222 to be at a reference potential, the above troubles can be prevented.

The crisper 207 in the refrigerator 201 has the atomization device 215. The opposite electrode 223 is applied with a high voltage. The case 225 has an opening 225A through which liquid is sprayed from the atomization electrode 222 to the crisper 207. This means that the atomization electrode 222, the opposite electrode 223, and the crisper 207 are actually communicated with one another though the opening 225A.

A user can touch the atomization electrode 222 or the opposite electrode 223 from the crisper 207. The refrigerator 201 in the third embodiment has a protection unit that allows the case 225 and the opening 225A to have shapes not allowing a finger of the user to pass and that prevents the finger from physically touching the electrodes.

In other words, the protection unit in the third embodiment has a protection function of preventing that current flowing in the electrode unit flows to the user through the atomization electrode 222 that is the atomization tip.

It should be noted that the case 225 may be made of a conductive material, like the case 125 in the second embodiment, thereby producing the same effects as that of the case 125.

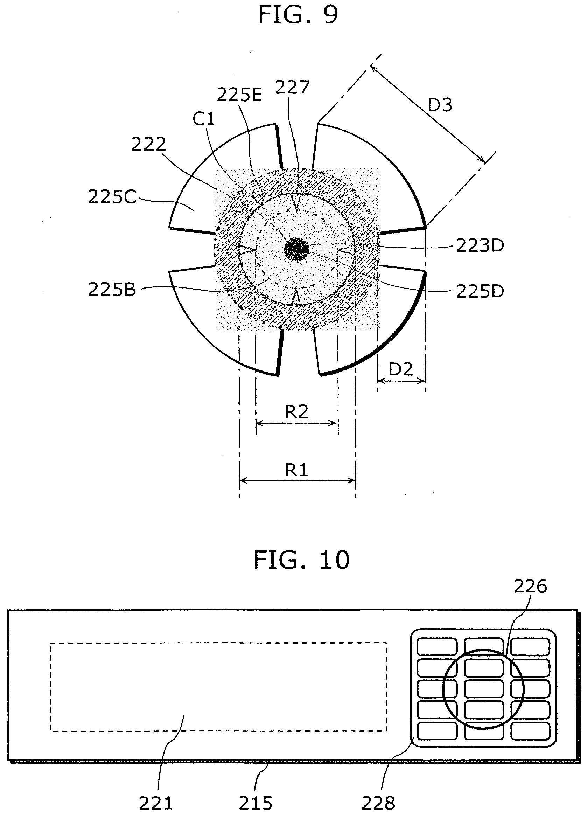

FIG. 8 is a front view of the atomization device 215 in the refrigerator 201. FIG. 9 is a detailed view of the opening 225A of the atomization device 215. The opening 225A of the case 225 includes a primary opening 225B and auxiliary openings 225C. The primary opening 225B is a circular opening with a diameter R1 of around 5 mm, not allowing a finger of the user to pass. In addition, a distance D1 between the opening 225A and the opposite electrode 223 stored in the case 225 is around 10 mm. This structure prevents a finger of the user from reaching the opposite electrode 223 though the opening 225A. The diameter R1 of approximately 5 mm is determined in consideration of a diameter of a finger of common children. Therefore, a finger of adults having a diameter of approximately 10 mm has a less possibility of entering the atomization device 215.

Four protruding parts 227 are provided at the inner edge of the primary opening 225B, protruding to the inside of the primary opening 225B. The protruding parts 227 allows the protection unit to have a structure which a finger of the user is more difficult to pass through. The four protruding parts 227 are arranged at intervals of equal angles, in other words, at intervals of 90 degrees, from a center 225D of the primary opening 225B. A circle C1 formed by tips of the protruding parts 227 has a diameter R2 of around 4 mm that is shorter than the diameter R1. Thereby, the primary opening 225B does not allow a finger of the user to pass, while having an area as wide as possible.

The four auxiliary openings 225C surrounding the primary opening 225B, forming a circle. The four auxiliary openings 225C are arranged at intervals of equal angles, in other words, at intervals of 90 degrees, from the primary opening 225B. A dimension D2 of each auxiliary opening 225C in a radiation direction from the center 225D is around 3 mm, and a dimension D3 of each auxiliary opening 225C that is measured circumferentially from the center 225D is around 10 mm. Liquid sprayed through the auxiliary openings 225C is spread into the crisper 207 as much as possible, and a finger of the user cannot enter the atomization device 215. Thereby, the protection function is further enhanced. Although the diameters R1 and R2, the distance D1, and the dimensions D2 and D3 have values as described above, they may have appropriate values so that the primary opening 225B and the auxiliary openings 225C can prevent a finger of the user from touching the opposite electrode 223.

The atomization electrode 222 extends along a center axis 229A. In the opening 225A, the center axis 229A of the atomization electrode 222 passes the primary opening 225B. Combination of the primary opening 225B and the auxiliary openings 225C does not allow a finger of the user to pass, without increasing a size of the primary opening 225B, and allows mist to be sprayed through both the primary opening 225B and the auxiliary openings 225C.

As shown in FIG. 9, the center axis 229A of the atomization electrode 222 passes the center 225D of the primary opening 225B. It is also possible that the same axis passes a center 223D of the opposite electrode 223 as well as the center 225D of the primary opening 225. This structure causes sprayed liquid to spread from the atomization electrode 222 into the crisper 207 homogeneously, without being blocked by the opposite electrode 223. Here, as far as an adequate amount of liquid can be sprayed into the crisper 207, the center axis 229A is not necessary to pass all of the center 225D of the primary opening 225B and the center 223D of the opposite electrode 223.

The opposite electrode 223 to which a high voltage is applied is located behind a part 225E between the primary opening 225B and the auxiliary openings 225C of the case 225. The opposite electrode 223 is not exposed from the case 225 through the primary opening 225B. This structure provides a protection function of preventing the user from touching the opposite electrode 223 by a stick-shaped conductive tool.

It should be noted that the shapes and dimensions of the above-described structures are not limited to the above, as far as an adequate amount of liquid can be sprayed into the crisper 207 and the user cannot touch directly the opposite electrode 223. Especially, if a small amount of liquid is to be sprayed, the openings of the case 225 are designed to be small, while if a large amount of liquid is to be sprayed, the openings of the case 225 are designed to be large.

In the third embodiment, liquid is attached to the atomization electrode 222 and thereby the liquid has a reference potential, and the opposite electrode 223 is applied with a high voltage of +7 kV. As far as liquid can be atomized, a potential difference between the liquid and the opposite electrode 223 is not limited to 7 kV. If the potential difference is equal to or more than 4 kV, liquid can be atomized.

It is also possible, for example, to set a potential of the atomization electrode 222, namely, a potential of liquid, to -2 kV, and set a potential of the opposite electrode 223 to +5 kV, thereby producing a potential difference of 6 kV. In this situation, a balance between positive charge amount and negative charge amount in sprayed liquid is biased to be negative. Therefore, a balance between positive charge amount and negative charge amount in objects such as stored items attached with the sprayed liquid is also biased to be negative and the objects are charged. However, since the potential of -2 kV is relatively small, the objects such as stored items do not cause various troubles. Moreover, in the above case, an amount of OH radicals in the sprayed liquid is more than that in the situation where a potential of liquid, namely, a potential of the atomization electrode 222 is set to be a reference potential.

As described above, in the third embodiment, the atomization electrode 222 and the opposite electrode 223 to which a high voltage is applied are covered by the case 225 that has the opening 225A at a portion through which sprayed liquid passes. The opening 225A communicating the crisper 207 to the atomization electrode 222 and the opposite electrode 223 forms a protection unit through which sprayed liquid is supplied to the crisper 207 and which has a size not allowing a finger of the user to pass. Thereby, the opening 225A produces a protection effect of preventing the finger from physically touching the atomization electrode 222. As a result, the refrigerator 201 can prevent the user from touching the atomization electrode 222 and the opposite electrode 223 in normal use situations.

As described above, the opening 225A is provided on the center axis 229A of the atomization electrode 222. Thereby, the opening 225A exists in the direction 215A of spraying liquid from the atomization electrode 222. This structure does not block liquid sprayed to outside of the case 225 even if the case 225 has the protection unit. As a result, a large amount of liquid can be sprayed and spread into the crisper 207.

As described above, the opening 222A of the opposite electrode 223 is provided on the center axis 229A of the atomization electrode 222. Thereby, the opening 225A exists in the direction 215A of spraying liquid from the atomization electrode 222. This structure does not block liquid sprayed to outside of the case 225. As a result, a large amount of liquid can be sprayed and spread into the crisper 207.

The atomization device 215 in the refrigerator 201 according to the third embodiment is an electrostatic atomization device that includes the atomization electrode and the opposite electrode 223 which are electrode units. Here, an atomization tip of the atomization device 215 from which liquid is sprayed serves as the atomization electrode 222. However, the refrigerator 201 may have a different atomization device such as an ultrasonic atomization device. The ultrasonic atomization device includes an atomization tip and an oscillator that oscillates the atomization tip. The atomization tip and the oscillator serve as an electrode unit made of a metal. The same protection unit as that of the atomization device 215 can prevent a user from touching the electrode unit.

Here, in the first and second embodiments, the protection unit causes sprayed mist to have a reference potential and thereby prevents the case 125 in the crisper from being electrically charged. In the third embodiment, the protection unit is a cover or the like that produces a protection function of preventing the user from physically touching the atomization electrode 222. If the above protection units are combined, for example, stored items are not charged, because sprayed mist itself has the reference potential. In addition, since the cover is to charge the mist itself positively, the cover is charged positively more than the mist. Thereby, the mist attached to the cover is influenced by charge of the cover and is therefore charged positively more than mist sprayed into the compartment.

Since a human body of the user has characteristics of being positively charged, it is possible to prevent physical current leakage when the user touches the protection unit such as the cover. In addition, as a synergistic effect, since mist attached to the cover is charged more positively, a potential difference between the mist and the user is small and thereby current is unlikely to flow between the mist and the user. More specifically, the third embodiment for physically blocking current flowing from the atomization device is combined with a structure, as described in the first or second embodiment, for causing mist itself to have a reference potential and applying a voltage to the opposite electrode to be positive. Therefore, even if surroundings of the cover is likely to cause current leakage due to attached mist, the protection unit obtained from the above combination makes it possible to charge the attached mist positively and thereby reduce current flowing to a human body. The combination can provide a protection function having synergetic effects, and can form a significantly effective protection unit.

### (Fourth Embodiment)

The common parts in the structure and techniques between the already-described first to third embodiments and the fourth embodiment are not described in detail again in the fourth embodiment. In addition, if any of the techniques already described in the first to third embodiments can be applied in the fourth embodiment, any combination of (a) the techniques and the structure already described in the first to third embodiments and (b) those of the fourth embodiment is possible.

The refrigerator according to the fourth embodiment has a protection unit that suppresses current flowing in an electrode unit from flowing to a user via an atomization unit. The protection unit in the fourth embodiment has a structure different from that of the protection unit in the refrigerator 201 in the third embodiment. The same reference numerals regarding the refrigerator 201 according to the third embodiment are assigned to the identical parts of a refrigerator according to the fourth embodiment, so that the identical parts are not explained again below.

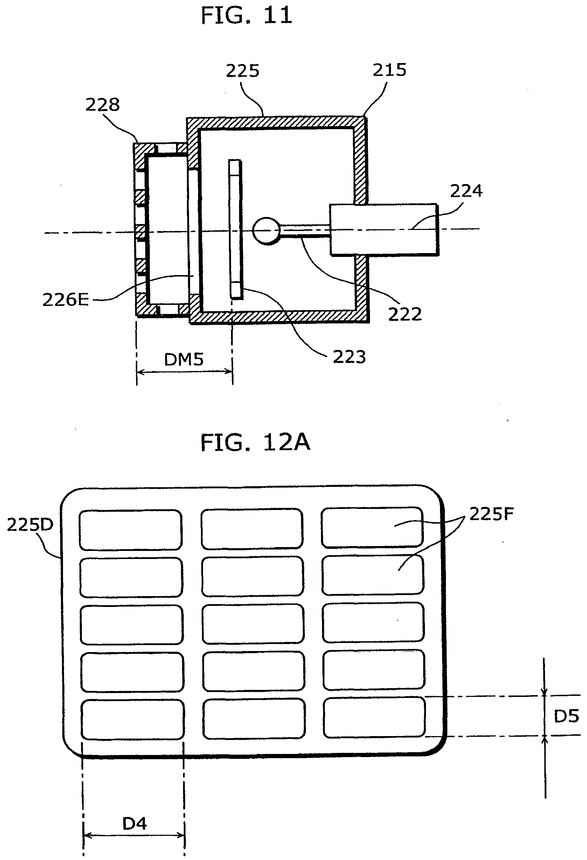

FIGS. 10 and 11 are a front view and a cross-sectional side view, respectively, of the atomization device 215 in the refrigerator according to the fourth embodiment. An opening 226 of the case 225 has a circular shape with a maximum diameter. In order to prevent a finger of a user from entering the case 225, the opening 226 is covered by a protection cover 228 that is a protection unit having lattice openings. Thereby, the fourth embodiment provides a protection unit to produce a protection function of preventing a user from physically touching the atomization electrode 222.

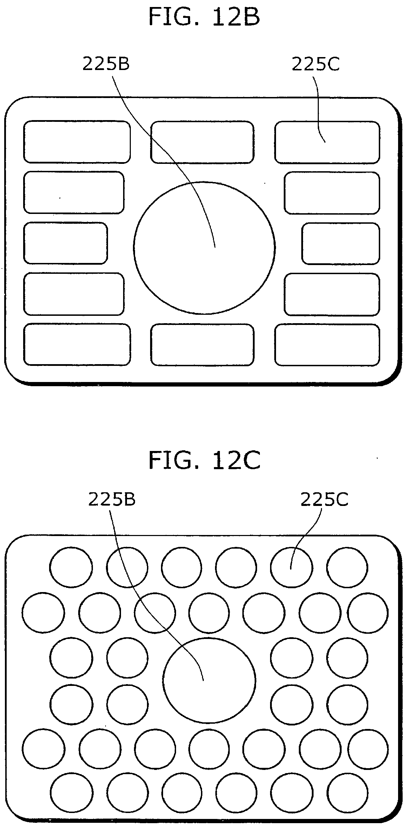

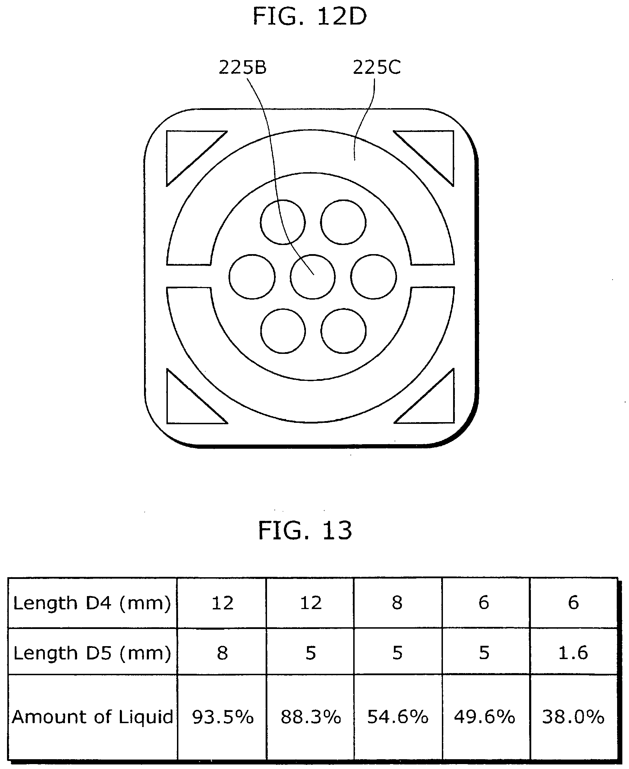

FIGS. 12A, 12B, 12C, and 12D are front views of variations of the atomization device 215. FIG. 12A shows a plurality of rectangular openings 225F provided in the protection cover 228. The protection cover 228 is provided with a lattice having the plurality of openings 225F. Mist that is sprayed liquid is sprayed from the openings. Moreover, the protection cover 228 protrudes in the direction 215A as shown in FIG. 7. A dimension DM5 from the opposite electrode 223 to the surface of the protection cover 228 is equal to or more than 40 mm. The above structure can more surely prevent a user from touching the opposite electrode 223 and also completely insulate the user from a voltage of +7 kV applied to the opposite electrode 223.

In order to completely insulate the user, the dimension DM5 has any value that is equal to or more than 30 mm as far as an absolute value of the applied voltage is more than 3 kV and no more than 7 kV. If the applied voltage exceeds 12 kV, the dimension DM5 should be equal to or more than 50 mm. An optimum value of the dimension DM5 is determined depending on the applied voltage.

FIG. 13 shows a relationship among a dimension (length) D4 of a long side of each of the plurality of rectangular openings 225F, a length D5 of a short side of each of the openings 225F, and an amount of sprayed liquid. In FIG. 13, the amount of liquid is expressed by a ratio of (a) an amount of liquid sprayed from the atomization device 215 having the protection cover 228 to (b) an amount of liquid sprayed from the atomization device 215 without the protection cover 228. Based on FIG. 13, the long side length D4 is around 12 mm and the short side length D5 is around 5mm, so that an amount of liquid sprayed into the crisper 207 is not reduced. The dimensions having the above values can hold 85% or more of an amount of sprayed liquid in comparison with the situation without the protection cover. Therefore, it is possible to supply the crisper 207 with mist having a necessary amount, without especially reducing an amount of sprayed liquid.

The center axis 229A of the atomization electrode 222 passes the center of an opening 226E provided in the case 215. Thereby, sprayed liquid emitted from the atomization electrode 222 is homogeneously spread into the crisper 207.

The same axis passes the center 223D of the opposite electrode 223 as well as the center of the opening 226E. Thereby, sprayed liquid emitted from the atomization electrode 222 is spread into the crisper 207 without being blocked by the opposite electrode 223. In other words, the center axis 229A of the atomization electrode 222 passes the center of the opposite electrode 223 and the center of the opening 226E. Here, as far as an adequate amount of sprayed liquid is supplied to the crisper 207, all of the center axis 229A, the center of the opposite electrode 223, and the center of the opening 226E do not need match.

FIG. 12B shows another variation of the protection cover 228 that has the opening 225B and a plurality of rectangular openings 225F as the auxiliary openings 225C. FIG. 12C shows still another variation of the protection cover 228 that has the opening 225B having a circular shape and a plurality of circular openings 225G as the auxiliary openings 225C. FIG. 12D shows still another variation of the protection cover that serves as a protection unit having the opening 225B having a circular shape and a plurality of openings 225H as the auxiliary openings 225C each having a round arch shape. The above-described openings may have circles or any other polygonal shapes, as far the openings do not allow a finger of a user to pass.

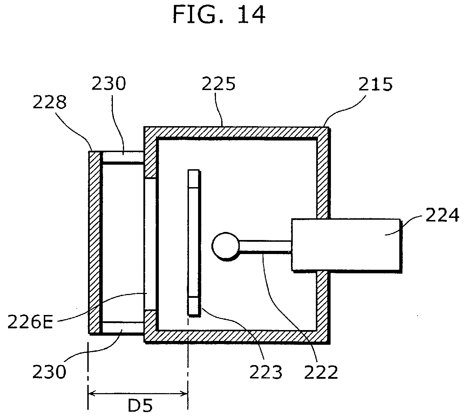

FIG. 14 is a cross-sectional side view of a variation of the protection cover 228 provided to the atomization device 215. This protection cover 228 is arranged in front of the opening 226E, in other words, a front side of the atomization device 215. The protection cover 228 completely screens the opening 226E in order to prevent a finger of the user from entering the opening 226E. The protection cover 228 has side openings 230 at top and bottom surfaces and left and right surfaces. Sprayed liquid is spread from the side openings 230 into the crisper 207. However, some of the sprayed liquid is blocked by the protection cover 228 and thereby reduced. Therefore, it is desirable that the above protection cover 228 is used when a large amount of sprayed liquid is not especially necessary, or when the sprayed liquid can be spread by using a fun producing a flow of air.

The refrigerator according to the fourth embodiment has the protection cover 228 in front of at least the opening 226E for the opposite electrode 223 that is an atomization tip which is stored in the case 225 and located opposite to the atomization electrode 222. Thereby, a protection unit having a double structure is achieved. The protection unit prevents a finger of the user from reaching the opposite electrode 223.

In the protection unit having the double structure, a predetermined distance is provided between the protection cover 228 and the opening 226E, in order to increase an area of the opening 226E, thereby enhancing an ability of spreading sprayed liquid. This structure also prevents a finger of the user from reaching the opposite electrode 223.

It should be noted that the protection cover 228 has been described to have various shapes as shown in FIGS. 12A, 12B, 12C, and 12D not allowing a finger of the user to pass. However, it is also possible to form the same various shapes of openings in the case 225, to serve as protection covers. The openings also prevent a finger of the user from reaching the opposite electrode 223.

Here, in the first and second embodiments, the protection unit causes sprayed mist to have a reference potential and thereby prevents the case 125 in the crisper from being electrically charged. In the fourth embodiment, the protection unit is a cover or the like that produces a protection function of preventing the user from physically touching the atomization electrode 222. If the above protection units are combined, for example, stored items are not charged, because sprayed mist itself has the reference potential. In addition, since the cover is to charge the mist itself positively, the cover is charged positively more than the mist. Thereby, the mist attached to the cover is influenced by charge of the cover and is therefore charged positively more than mist sprayed into the compartment.

Since a human body of the user has characteristics of being positively charged, it is possible to prevent physical current leakage when the user touches the protection unit such as the cover. In addition, as a synergistic effect, since mist attached to the cover is charged more positively, a potential difference between the mist and the user is small and thereby current is unlikely to flow between the mist and the user. More specifically, the fourth embodiment for physically blocking current flowing from the atomization device is combined with a structure, as described in the first or second embodiment, for causing mist itself to have a reference potential and applying a voltage to the opposite electrode to be positive. Therefore, even if surroundings of the cover is likely to cause current leakage due to attached mist, the protection unit obtained from the above combination makes it possible to charge the attached mist positively and thereby reduce current flowing to a human body. The combination can provide a protection function having synergetic effects, and can form a significantly effective protection unit.

### (Fifth Embodiment)

The common parts in the structure and techniques between the already-described first to fourth embodiments and the fifth embodiment are not described in detail again in the fifth embodiment. In addition, if any of the techniques already described in the first to fourth embodiments can be applied in the fifth embodiment, any combination of (a) the techniques and the structure already described in the first to fourth embodiments and (b) those of the fifth embodiment is possible.

The refrigerator according to the fifth embodiment forming the present invention has a protection unit. The protection unit differs from the protection unit in the refrigerator according to the third or fourth embodiment in preventing a user from touching the opposite electrode 223 by using a stick-shaped conductive tool. The same reference numerals regarding the refrigerator according to the third and fourth embodiments are assigned to the identical parts of the refrigerator according to the fifth embodiment, so that the identical parts are not explained again below.

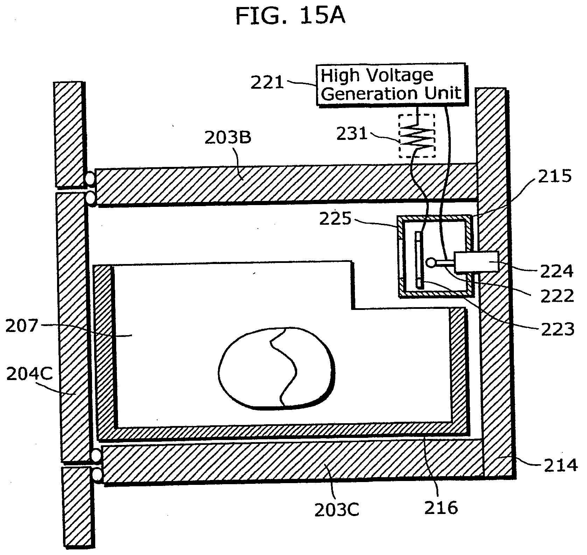

FIG. 15A is a cross-sectional side view of a crisper in the refrigerator according to the fifth embodiment of the present invention. Between the high voltage generation unit 221 and the opposite electrode 223, there is provided a current-limit circuit 231 serving as a protection unit for limiting current.

In a situation where a user touches the opposite electrode 223 directly or by using a stick-shaped conductive tool, current of approximately 60 µA flows from the opposite electrode 223 to the user in a moment. The current-limit circuit 231 has a current-limit resistance to limit the current. Current with a current value of approximately 60 µA does not harm the user, but sometimes gives painful electric shock to the user and thereby makes the user anxious.

How the user feels electric shock depends mainly on a size of a current value, rather than a size of a voltage value. In the fifth embodiment, even if current flows from the electrode to the user directly or via water or, a current value of the current is decreased in order not to make the user feel irritation.

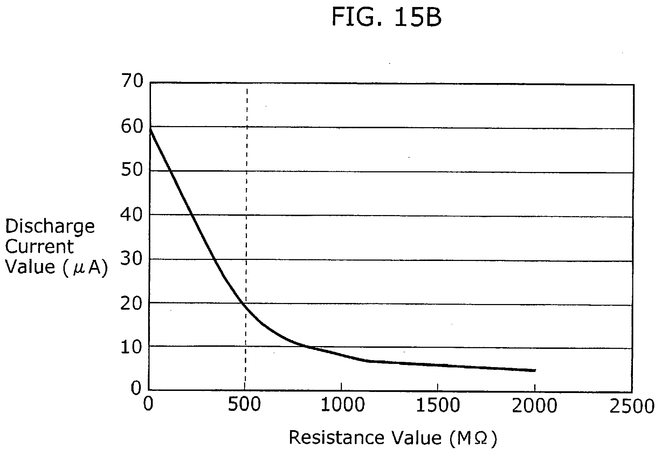

FIG. 15B shows a current value of current caused by discharge to a user (discharge current value) versus a resistance value of the current-limit circuit 231. If the current value is equal to or less than 20 µA, the user does not feel electric shock. In the fifth embodiment, as shown in FIG. 15B, the current-limit circuit 231 is set to have a resistance value of approximately 500 MΩ in order to limit a current value of the current flowing in a moment to be equal to or less than 20 µA. In the fifth embodiment, in order to give a further allowance for preventing electric shock from the user directly touching the opposite electrode 223, the resistance value of the current-limit circuit 231 is determined as being 1000 MΩ.

In the fifth embodiment, the current-limit circuit 231 serves as a protection unit that limits current discharged to a human body. The protection unit may, for example, detect opening of the door 204C and thereby limit an applied voltage or flowing current. It is also possible that the protection unit detects that a part of the user's body enters the crisper 207 and thereby limits an applied voltage or flowing current.

As described above, the refrigerator according to the fifth embodiment has the current-limit circuit 231 that limits current flowing to the opposite electrode 223. The current-limit circuit 231 decreases a current value of a current flowing to the opposite electrode 223 so that the current is enough to atomize liquid but does not harm the user. Thereby, in a situation where the user touches directly the opposite electrode 223, current discharged from the opposite electrode 223 to the user is quite little. As a result, a risk of electric shock can be significantly reduced.

### (Sixth Embodiment)

The common parts in the structure and techniques between the already-described first to fifth embodiments and the sixth embodiment are not described in detail again in the sixth embodiment. In addition, if any of the techniques already described in the first to fifth embodiments can be applied in the sixth embodiment, any combination of (a) the techniques and the structure already described in the first to fifth embodiments and (b) those of the sixth embodiment is possible.

In the refrigerators according to the third to fifth embodiments, the opposite electrode 223 is applied with a high voltage even while a user puts his/her hand into the crisper 207.

The refrigerator according to the sixth embodiment has the same structure as that of any one of the refrigerators according to the third to fifth embodiments, but also has a control unit 244 that stops applying a high voltage to the opposite electrode 223 when the user opens the door 204C of the crisper 207.

The same reference numerals regarding the refrigerators according to the third to fifth embodiments are assigned to the identical parts of the refrigerator according to the sixth embodiment, so that the identical parts are not explained again below.

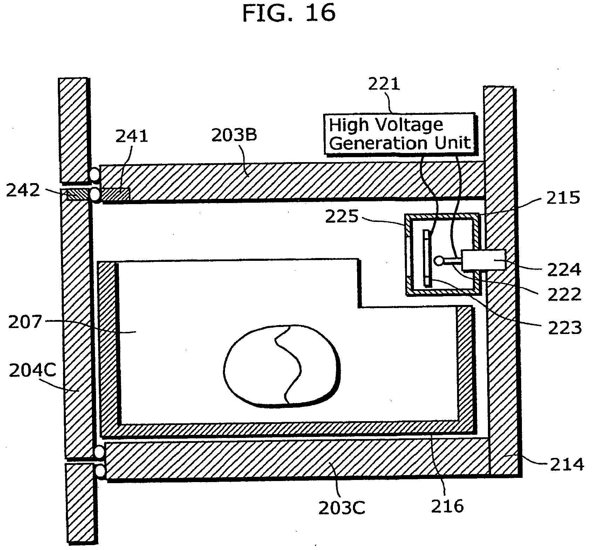

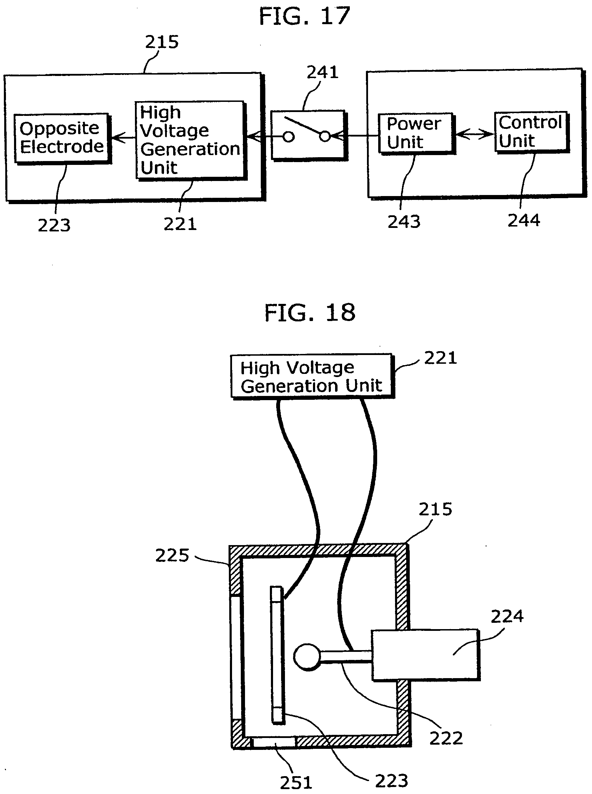

FIG. 16 is a cross-sectional side view of a crisper of the refrigerator according to the sixth embodiment. FIG. 17 is a block diagram of a high voltage stop unit 241 of an atomization device in the refrigerator according to the sixth embodiment.

The high voltage stop unit 241 is a reed switch operated by a magnet 242 provided at the door 204C of the crisper. The high voltage stop unit 241 detects opening and closing of the door and thereby stops applying a high voltage to the opposite electrode 223. While the door 204C of the crisper is closed, a contact point of the reed switch of the high voltage stop unit 241 is closed, in other words, the contact point is switched on. On the other hand, while the door 204C of the crisper is opened, the contact point is opened, in other words, the contact point is switched off.

The high voltage stop unit 241 is arranged between (a) the high voltage generation unit 221 applying a high voltage to the opposite electrode 223 and (b) a power unit 243 supplying power to the high voltage generation unit 221.

The high voltage generation unit 221 boosts a voltage off approximately 22 V supplied from the power unit 243. The power supply from the power unit 243 is controlled by the control unit 244 that determines necessity of atomization.

When the door 204C of the crisper is opened and the reed switch as the high voltage stop unit 241 is opened, the power supply to the high voltage generation unit 221 is surely blocked off regardless of the determination of the control unit 244 and eventually a high voltage is not applied to the opposite electrode 223.

The above structure can surely prevent a high voltage from being applying to the user. As described above, the high voltage stop unit 241 serves as a protection unit providing a protection function of preventing that the user is applied with a high voltage.

In the refrigerator according to the sixth embodiment, while the door 204C of the crisper 207 is closed, the contact point of the reed switch of the high voltage stop unit 241 is closed (switched on) due to a magnetic field of the magnet 242 provided at the door 204C. If the control unit 244 determines that atomization is necessary, a high voltage is supplied from the power unit 243 to the high voltage generation unit 221 and the high voltage generation unit 221 applies a high voltage to the opposite electrode 223. Thereby, liquid is atomized to be sprayed into the crisper. As a result, the crisper 207 is immediately humidified.

While the door 204C of the crisper 207 is opened, the contact point of the reed switch of the high voltage stop unit 241 is opened (switched off) and thereby power supply from the power unit 243 is blocked off regardless of the determination for atomization necessity made by the control unit 244. As a result, application of a high voltage to the opposite electrode 223 is blocked off.

The high voltage stop unit 241 may have a hall element instead of the reed switch. According to signals provided from the hall element, the control unit 244 can control the power unit 243 to stop the power supply.

It is also possible that the control unit 244 controls stop of applying a high voltage, not only by detecting opening and closing of the door, but also by detecting that the user approaches the refrigerator or by detecting that the user puts his/her hand into the crisper 207.

The above cases, however, are not perfect means for surely blocking application of a high voltage when the user opens the door, if the control unit 244 operates erroneously due to noise or the like in the circuit.

Therefore, it is desirable to have a door opening/closing detection unit, such as the reed switch described in the sixth embodiment, that enables the contact point to be mechanically opened and closed by completely blocking an output of the power unit 243 regardless of the determination for the atomization necessity made by the control unit 244.

It should be noted that the high voltage stop unit 241 may be a push contact point opening/closing device that is designed so that the device cannot be easily operated from the outside. This push contact point opening/closing device prevents erroneous operations caused by external factors such as noise in electricity, a magnetic field, or the like. As a result, blocking of a high voltage is surely executed.

Furthermore, if a semiconductor switch without a contact point such as a hall element is also provided together with the high voltage stop unit with a contact point as described in the sixth embodiment, it is possible to block a high voltage more surely.

As described above, the refrigerator according to the sixth embodiment has the high voltage stop unit 241 that detects opening of the door 204C of the crisper 207. The high voltage stop unit 241 detects opening of the door 204C, and based on the detection, power supply to the high voltage generation unit 222 is stopped. As a result, when the user puts his/her hand into the crisper 207, a high voltage is not applied to the opposite electrode 223 and thereby current does not flow from the opposite electrode 223 to the user.

Furthermore, the high voltage stop unit has a contact point that mechanically blocks power supply to the high voltage generation unit 221 when the door 204C of the crisper 207 is opened. Thereby, the high voltage stop unit can open and close the contact point mechanically independently from the control unit 244 including a microcomputer and the like. Therefore, even if a trouble occur in the control unit 244 due to noise or the like, a high voltage is not applied to the opposite electrode 223 when the user puts his/her hand into the crisper 207.

### (Seventh Embodiment)

The common parts in the structure and techniques between the already-described first to sixth embodiments and the seventh embodiment are not described in detail again in the seventh embodiment. In addition, if any of the techniques already described in the first to sixth embodiments can be applied in the seventh embodiment, any combination of (a) the techniques and the structure already described in the first to sixth embodiments and (b) those of the seventh embodiment is possible..

. A refrigerator according to the seventh embodiment differs from the refrigerators according to the third to sixth embodiments in further having a protection unit that prevents current from flowing to a user via liquid. The same reference numerals regarding the refrigerators according to the third to sixth embodiments are assigned to the identical parts of the refrigerator according to the seventh embodiment, so that the identical parts are not explained again below.

FIG. 18 is a cross-sectional side view of an atomization device used in the refrigerator according to the seventh embodiment. A water flowout path 251 serving as a protection unit is provided at a bottom surface of the case 225. All liquid stored in the case 225 flows out along the water flowout path 251.

The cooling pin 224 causes dew condensation on the atomization electrode 222. If liquid of excessive dew condensation on the atomization electrode 222 is accumulated in the case 225, or if a part of sprayed liquid contacts the inside of the case 225 and is therefore accumulated in the case 225, there is a possibility that the opposite electrode 223 is submerged in the accumulated liquid. If the high voltage generation unit 221 is provided in the case 225, the high voltage generation unit 221 would be submerged in the accumulated liquid.

In the above situation, the high voltage generation unit 221 operates erroneously and is damaged. Furthermore, if the liquid accumulated in the case 225 is leaked from the openings, the user can easily touch the liquid. The liquid is probably conducted to a part applied with a high voltage. If the user touches the liquid, there is a risk that current flows into the user. The water flowout path 251 provided at the bottom surface of the case 225 allows liquid to flow out from the case 225 in order not to be accumulated in the case 225, thereby producing a protection function of preventing current leakage.

The water flowout path 251 prevents liquid except liquid sprayed into the crisper 207 from remaining in locations near the atomization electrode 222, the opposite electrode 223, and the high voltage generation unit 221. Even if liquid remains in the case 225, the liquid flows out from the water flowout path 251 and evaporated while flowing along a wall surface at a rear side of the storage compartment Therefore, it is possible to prevent electric shock, short of a circuit, and the like caused by accumulated liquid.

In order to facilitate the evaporation, the water flowout path 251 is generally arranged so that the liquid flows out to vicinity of a crisper heater provided at the wall surface of the back of the crisper 207. The above structure can surely prevent liquid from storing in a storage compartment, and thereby prevent troubles due to dew condensation in the storage compartment.

It should be noted that the protection unit according to the seventh embodiment is a water discharge path, but the water flowout path can be combined with the protection unit according to any of the first to seventh embodiments in order to more surely prevent current from flowing to the user.

In the first and second embodiments the protection unit causes sprayed mist to have a reference potential and thereby prevents the case 125 in the crisper from being electrically charged. In the seventh embodiment, the protection unit is a water flowout path for preventing liquid from storing in a cover in order to produce a protection function. Especially when the above protection units are combined, the following occurs, for example. Since sprayed mist itself has a reference potential, the liquid which is accumulated in the cover and then flows out is firstly at the reference potential. However, since the cover is to charge the mist itself positively, the cover is charged positively more than the mist. Thereby, the liquid accumulated in the cover is influenced by charge of the cover and is therefore charged positively more than mist sprayed into the compartment.

Since a human body of the user has characteristics of being positively charged, it is possible to prevent physical current leakage when the user touches water flew out from the cover. In addition, as a synergistic effect, since the water flew out from the cover is charged more positively, a potential difference between the water and the user is small and thereby current is unlikely to flow between the water and the user. More specifically, the present embodiment for physically blocking current flowing from the atomization device is combined with a structure for causing mist itself to have a reference potential and applying a voltage to the opposite electrode to be positive. Therefore, even if surroundings of the cover is likely to cause current leakage due to the water flew out from the cover, the protection unit obtained from the above combination makes it possible to charge the water flew out from the cover positively and thereby reduce current flowing to a human body. The combination can provide a protection function having synergetic effects, and can form a significantly effective protection unit.

### (Eighth Embodiment)

The common parts in the structure and techniques between the already-described first to seventh embodiments and the eighth embodiment are not described in detail again in the eighth embodiment. In addition, if any of the techniques already described in the first to seventh embodiments can be applied in the eighth embodiment, any combination of (a) the techniques and the structure already described in the first to seventh embodiments and (b) those of the eighth embodiment is possible.

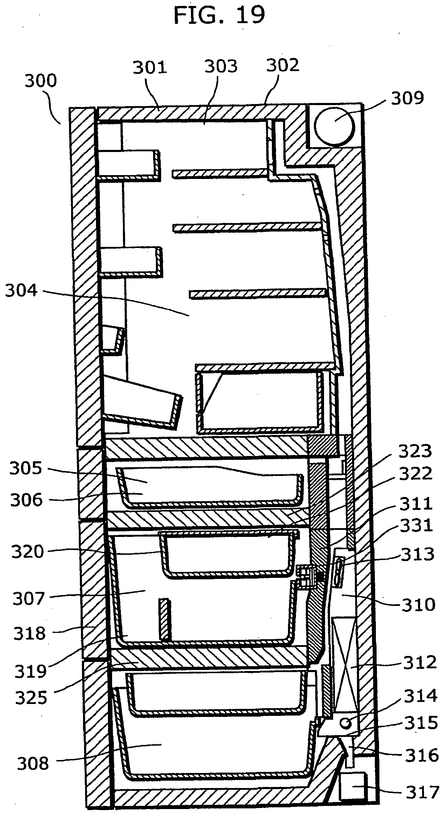

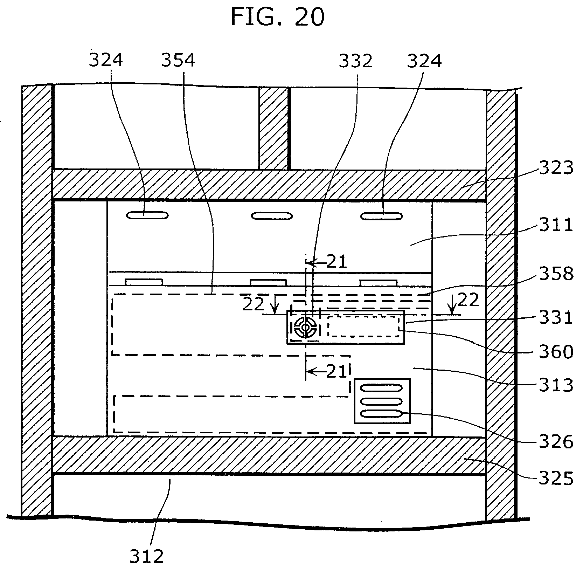

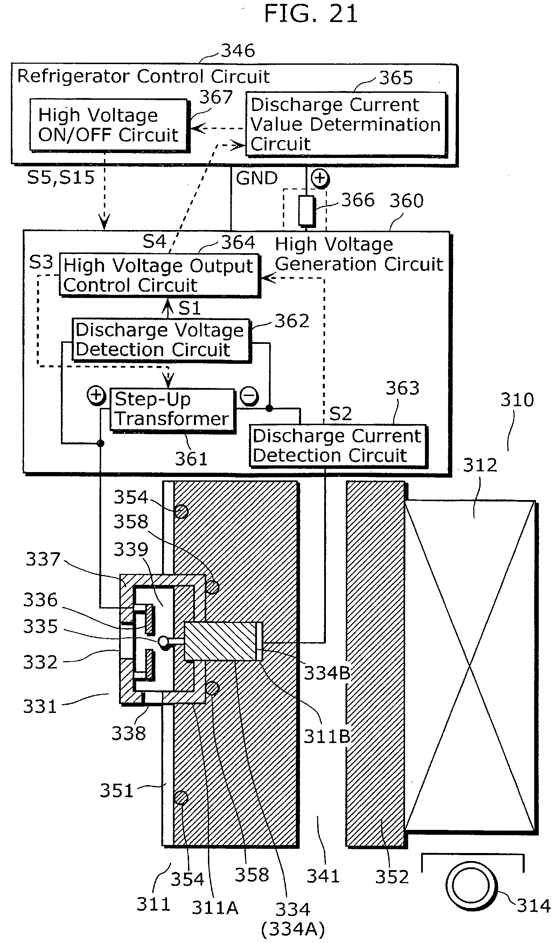

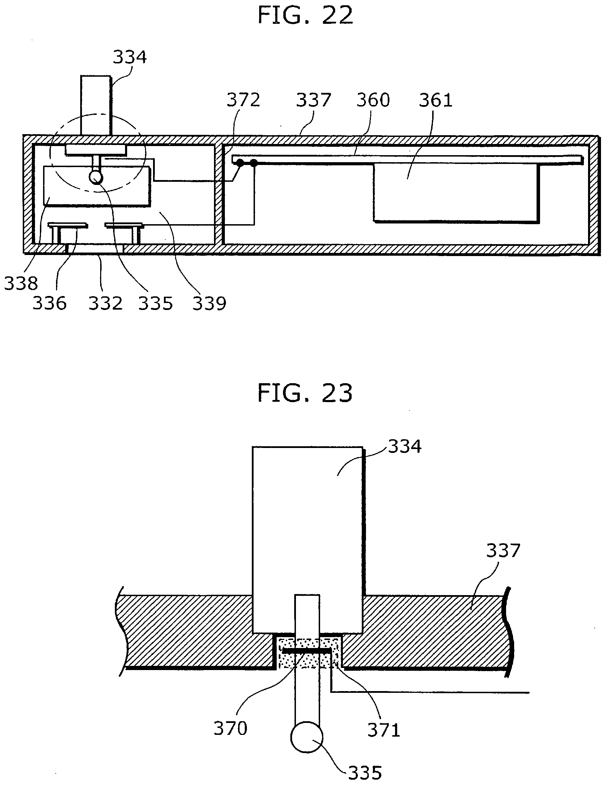

FIG. 19 is a vertical cross-sectional view of a refrigerator 300 according to the eighth embodiment. FIG. 20 is a front view of vicinity of the crisper 307 in the refrigerator 300. FIG. 21 is a cross-sectional view of the refrigerator 300 taken along line 21-21 of FIG. 20. FIG. 22 is a cross-sectional view of the refrigerator 300 taken along line 22-22 of FIG. 20. FIG. 23 is a detailed view of the refrigerator 300 of FIG. 22.

The refrigerator 300 includes a heat-insulating main body 301. The heat-insulating main body 301 includes: an external body 302 made mainly of a steel plate; an internal body 303 molded of resin such as Acrylonitrile Butadiene Styrene (ABS); a heat insulator filled between the external body 302 and the internal body 303. The heat insulator is foam insulation such as rigid urethane foam or vacuum insulation. The heat insulator provides heat insulation among a plurality of storage compartments formed in the heat-insulating main body 301. At a top portion of the heat-insulating main body 301, there is a refrigerator compartment 304 as the first storage compartment. Under the refrigerator compartment 304, a switch compartment 305 as the fourth storage compartment and an ice compartment 306 as the fifth storage compartment are arranged side-by-side. Under the switch compartment 305 and the ice compartment 306, a crisper 307 as the second storage compartment is provided. At a bottom portion of the heat-insulating main body 301, there is a freezer compartment 308 as the third storage compartment. The crisper 307 has a temperature higher than that of any other storage compartments.

A temperature of the refrigerator compartment 304 is generally set to be within a refrigerating temperature zone from 1°C to 5°C, having a lower limit to prevent refrigerated items from being frozen. The temperature of the crisper 307 is set to be within a vegetable temperature zone from 2°C to 7°C, which is equal to or slightly higher than that of the refrigerator compartment 304. A temperature of the freezer compartment 308 is generally set to be within a freezing temperature zone from -22°C to -15°C to freeze stored items. In order to improve freezing state, the temperature of the freezer compartment 308 is sometimes set to be within a lower freezing temperature zone, for example, from -30°C to -25°C. A temperature of the switch compartment 305 can be switched by the user among: the refrigerating temperature zone from 1°C to 5°C; the vegetable temperature zone from 2°C to 7°C; the freezing temperature zone generally from -22°C to -15°C; a desired temperature zone that is predetermined from a range from the refrigerating temperature zone to the freezing temperature zone. The switch compartment 305 is a storage compartment arranged next to the ice compartment 306 and has an independent door that is often a drawer-type door..

In the eighth embodiment, the temperature of the switch compartment 305 can be selected in a range from the refrigerating temperature zone to the freezing temperature zone. It is also possible that the temperature of the switch compartment 305 is selected only in a temperature zone in the middle between the refrigerating temperature zone and the freezing temperature zone. The temperature of the switch compartment 305 may be fixed to be within a certain temperature zone. The ice compartment 306 includes an automatic ice maker and an ice storage container. The automatic ice maker makes ice from water provided from a water storage tank in the refrigerator compartment 304. The ice storage container is arranged immediately under the automatic ice maker and stores the ice.

At a top surface of the heat-insulating main body 301, there is a step-shaped recess part providing an area at the back of the refrigerator 300. The recess part serves as a mechanical room, and accommodates a compressor 309 and structural parts applying a high pressure to refrigerant in the refrigeration cycle. The structural parts are included in the refrigeration cycle such as a drier for eliminating water. In other words, the mechanical room storing the compressor 309 is located at a top and rear portion of the refrigerator compartment 304 and protrudes towards the inside of the refrigerator compartment 304.

A user cannot easily reach a rear region of the top storage compartment in the heat-insulating main body 301. Therefore, the rear region is a dead space. In conventional general refrigerators, a mechanical room storing a compressor is located in a rear region of a bottom storage compartment in a heat-insulating main body. If a mechanical room is provided at the rear region of the top storage compartment in the heat-insulating main body 301 and stores the compressor 309, it is possible to efficiently use a bottom space of the heat-insulating main body in the conventional refrigerator. As described above, the refrigerator 300 according to the eighth embodiment is convenient and can store more items.

In the refrigerator 300 according to the eighth embodiment, isobutene (R600a) is used as refrigerant circulating in the refrigeration cycle in view of global environmental protection. Isobutene is flammable refrigerant having a small coefficient of global warming. Isobutene has a specific capacity approximately double (2,04 times) of that of air at room temperature (300 K) and atmospheric pressure.

At the back of the crisper 307 and the freezer compartment 308, there is a cooling room 310 generating cool air. A transport ventilation flue for transporting the cool air to each storage compartment and a rear-side divider wall 311 are provided between the cooling room 310 and the crisper 307 and between the cooling room 310 and the freezer compartment 308. The transport ventilation flue has heat insulation properties. The divider wall 311 includes a heat insulator to separate and heat-insulate each storage compartment from the cooling room 310. In the cooling room 310, a cooler 312 is provided. In a space above the cooler 312 in the cooling room 310, there is a cooling fan 313. By forced circulation, the cooling fan 313 transports the cool air generated by the cooler 312 to the storage compartments such as the refrigerator compartment 304, the switch compartment 305, the ice compartment 306, the crisper 307, and the freezer compartment 308. The air provided from the cooling room 310 cools the respective storage compartments. In the eighth embodiment, cool air generated from the cooling room 310 is not provided directly to the crisper 307. The cool air generated from the cooling room passes along the ventilation flue and enters the refrigerator compartment 304 to cool the refrigerator compartment 304. Then, the cool air passing the refrigerator compartment 304 enters the crisper 307 to cool the crisper 307.

A radiant heater 314 made of a glass tube is provided in a space under the cooler 312. The radiant heater 314 removes frost and ice attached to the cooler 312 and its periphery when cooling. Under the radiant heater 314, there is a drain pan 315 that receives water generated in the defrosting. A drain tube 316 passes from the deepest part of the drain pan 315 to the outside of the heat-insulating main body 301. An evaporation dish 317 is located downstream of the drain tube 316.

In the crisper 307, a lower storage container 319 and an upper storage container 320 are arranged. The lower storage container 319 is placed in a frame equipped to a drawer-type door 318 of the crisper 307. The upper storage container 320 is placed in the lower storage container 319.

A lid 322 is held by (a) a divider wall 323 above the crisper 307 and (b) the internal body 303. The lid 322 seals mainly the upper storage container in the situation where the drawer-type door 318 is closed. While the drawer-type door 318 is closed, the lid 322 contacts top left, top right, and top rear edges of the upper storage container 320, and substantially contacts a top front edge of the upper storage container 320. Furthermore, in order to prevent humidity from escaping from the compartment in which food is stored, there is a minimum clearance between (a) left, right, and bottom edges of a rear side of the upper storage container 320 and (b) the lower storage container 319, as far as the upper storage container 320 can be moved without contacting the lower storage container 319.

Between the lid 322 and the divider wall 323, there is a ventilation flue for cool air to be provided to crisper outlets 324 provided at a rear-side divider wall 311. In addition, between the lower storage container 319 and the divider wall 325, there is a space serving as a ventilation flue for cool air. Crisper inlets 326 are provided at a lower portion of the rear-side divider wall 311 that is located at the back side of the crisper 307. Cool air cools the inside of the crisper 307 and is heat-exchanged, and then returns to the cooler 312 via these crisper inlets 326.

Cool air is provided to the refrigerator compartment 304 from the cooling room via the ventilation flue, and cools the inside of the refrigerator compartment 304. After that, the cool air enters the crisper 307 from the crisper outlets 324 to cool the inside of the crisper 307. Then, the cool air in the crisper 307 exits the crisper 307 from the crisper inlets 326 and returns to the cooling room 310. Therefore, the crisper 307 is located the most downstream of the ventilation flue for cool air.

It should be noted that the below-described matters regarding main parts of the eighth embodiment of the present invention can be applied to any conventional general refrigerator that is opened and closed by using a frame equipped to a door and a rail provided to an internal body. The lid 322, the crisper outlets 324, the inlets 326, and the ventilation flue are optimized depending on a configuration of the storage containers.

The rear-side divider wall 311 includes: a rear-side divider wall surface 351 made mainly of resin such as ABS; a ventilation flue made of foam polystyrene or the like for circulating cool air in the respective storage compartments; and a heat insulator 352 that separates the cooling room 310 from the crisper 307, providing heat insulation between them. At a part of a wall surface of the rear-side divider wall 311, which is an internal wall surface of the storage compartment (crisper), there is a recess part 311A having a temperature lower than that of any other parts of the rear-side divider wall 311. In the recess part 311A, an atomization device 331 serving as an electrostatic atomization device is provided.

The atomization device 331 includes an atomization unit 339, a high voltage generation circuit 360, and a case 337. In parts of the case 337, there are a spray port 332 and an opening 338.

The atomization unit 339 includes an atomization electrode 335 that is an atomization tip. The atomization electrode 335 is electrically connected via a connection unit 370 to wiring extending from the high voltage generation circuit 360, and connected to a metal pin 334. The atomization electrode 335 is fixed to the almost center of one end of the metal pin 334. The metal pin 334 is made of a good heat conductive material such as aluminum and stainless steel, and has a circular cylinder shape. The metal pin 334 is an atomization electrode cooler member that cools the atomization electrode 335. Furthermore, the periphery of the connection unit 370 is molded of resin 371 such as epoxy resin as sealer in order to cover the connection unit 370. The resin 371 keeps heat conduction for a long time and thereby prevents water from entering the connection unit 370. The resin 371 reduces thermal resistance between the atomization electrode 335 and the metal pin 334, thereby fixing the atomization electrode 335 to the metal pin 334.

It is also possible to insert the atomization electrode 335 to the metal pin 334 so as to reduce the thermal resistance.

The metal pin 334 has, for example, a circular cylinder shape with a diameter of approximately 10 mm and a length of approximately 15 mm. The metal pin 334 is made of a high heat conductive material such as aluminum or copper which has a heat capacity of 50 times or more, preferably 100 times or more as much as a heat capacity of the atomization electrode 335 with a diameter of approximately 1 mm and a length of approximately 5 mm. In order to conduct coldness/heat from one end to the other end of the metal pin 334 by using heat conduction, it is desirable that the metal pin 334 is covered by a heat insulator.

Moreover, the metal pin 334 needs to conduct a cool temperature in the heat insulator that is used to provide heat insulation between the storage compartment and the cooler 312 or the ventilation flue. Therefore, it is desirable that the metal pin 334 has a length that is 5 mm or more, and preferably 10 mm or more. However, if the length of the metal pin 334 is 30 mm or more, the heat conduction effect is reduced.

Meanwhile, since the atomization device 331 provided in the storage compartment (namely, the crisper) is in an environment of high humidity, the humidity would influence the metal pin 334. Therefore, it is preferable that the metal pin 334 is made of a metal material having corrosion resistance properties and rust resistance properties, or a material applied with surface processing such as alumite treatment or coating.

Furthermore, in the eighth embodiment, since the metal pin 334 has a circular cylinder shape, the metal pin 334 can be inserted to the recess part 311A of the heat insulator 352, by rotating the atomization device 331. As a result, the cooling pin 334 can be equipped with a smaller clearance.

It should be noted that the cooling pin 334 may be a square pillar or a regular polygon cylinder in shape. If the cooling pin 334 is one of these polygon cylinders, positioning is easier than that of a circular cylinder, so that the atomization device 331 can be arranged at a correct position.

In addition, when the atomization electrode 335 is arranged on a center axis of the cooling pin 334, it is possible to keep a distance constant between an opposite electrode 336 and the atomization electrode 335 even if the atomization electrode 335 is rotated to be inserted. As a result, a stable electric-discharge distance can be obtained.

The metal pin 334 serving as the atomization electrode cooler is fixed to the case 337, and protrudes through the case 337. In addition, the opposite electrode 336 having an annular disk shape is arranged closer to the storage compartment, facing the atomization electrode 335. The opposite electrode 336 keeps a constant distance from a tip of the atomization electrode 335. The spray port 332 is located on extension of the axis of the atomization electrode 335.

In vicinity of the atomization electrode 335, spraying of mist causes electric discharge due to application of a high voltage. Therefore, there is a possibility that a tip of the atomization electrode 335 is worn. The refrigerator 300 is generally often operated for a long time of 10 years or more. The surface of the atomization electrode 335 needs strong surface processing for providing antiwear properties. The atomization electrode 335 is desirably plated with nickel, gold, or platinum, for example.

The electricity connection unit 370 coupling the atomization electrode 335 to the high voltage generation circuit 360 is connected to the atomization electrode 335 and the high voltage generation circuit 360 by using a swage, press fitting, or the like. The periphery of the connection unit 370 is molded of the resin 371 such as epoxy resin as sealer, to be covered by the resin 371. The above structure can prevent leakage, abnormal heating, and the like caused by, for example, defects in equipping the atomization electrode 335 and the connection unit 370. Therefore, even if flammable refrigerant is filled and accumulated in the atomization device 331, it is possible to produce a protection function of eliminating a risk of igniting the refrigerant. As a result, further safety can be achieved. In addition, the above structure can prevent material deterioration and the like due to entry of humidity. As a result, reliability of parts of the refrigerator is increased. As described above, the resin 371 forms a protection unit that prevents flammable refrigerant from being ignited.

As described above, the high voltage generation circuit 360 is arranged in vicinity of the atomization unit 339. The high voltage generation circuit 360 that generates a high voltage has a negative potential side that is electrically connected to the atomization electrode 335 and a positive potential side that is electrically connected to the opposite electrode 336.

The opposite electrode 336 is made of a stainless steel, for example. In order to obtain its reliability for a long time, it is desirable that the opposite electrode 336 is applied with surface processing such as platinum plating especially for preventing foreign substance attachment and contamination.

The high voltage generation circuit 360 includes: a step-up transformer 361 that generates a high voltage; a detection circuit 363 that detects discharged current between the atomization electrode 335 and the opposite electrode 336; and a high voltage output control circuit 364. The high voltage generation circuit 360 communicates with and is controlled by the refrigerator control circuit 346 of the refrigerator 300. Thereby, the high voltage generation circuit 360 supplies and stops a high voltage based on input signals S5 and S15 provided from the refrigerator 300 or the electrostatic atomization device 331 (namely, the atomization device 311).

The high voltage generation circuit 360 is integrated with the electrostatic atomization device 331 that is an atomization device. In order to cope with a low-temperature and high-humidity atmosphere in the storage compartment, a surface of a substrate of the high voltage generation circuit 360 is applied with a mold material or a coating material for preventing moisture. The step-up transformer 361 includes a primary coil, a secondary coil, a magnetic core, and the like. The step-up transformer 361 is molded of resin such as epoxy resin as sealer. The step-up transformer 361 boosts a voltage supplied from the control circuit of the refrigerator 300 to a predetermined voltage to be provided.

Here, if the structure for voltage application (hereinafter, referred to as a "voltage applying unit") is arranged in a high-temperature environment outside the storage compartment, the coating material is not necessary.

Moreover, divider wall heaters 354 are provided between (a) the rear-side divider wall surface 351 to which the electrostatic atomization device 331 as the atomization device is fixed and (b) the heat insulator 352. The divider wall heaters 354 are used to adjust a temperature or prevent dew condensation in the storage compartment. In addition, metal pin heaters 358 are arranged in vicinity of the atomization unit 339. The metal pin heaters 358 are used to adjust a temperature of the metal pin 334, and prevents excess dew condensation in the periphery of the metal pin 334 including the atomization electrode 335 as the atomization tip.

The metal pin 334 is fixed to the case 337. The metal pin 334 itself has a convex part 334A that protrudes through the case 337. The metal pin 334 has a shape by which the convex part 334A extends in an opposite direction from the atomization electrode 335. The convex part 334 is engaged with a deepest recess part 311B of the rear-side divider wall 311. The deepest recess part 311B is deeper than the recess part 311A.

At the back side of the metal pin 334, there is the deepest recess part 311B at the bottom of the recess part 311A. Therefore, a part of the heat insulator 352 at the cooling room 310 side is thinner than any other portions of the rear-side divider wall 311 that is the rear side of the crisper 307. The thin heat insulator 352 serves as a thermal relaxation member. From the back of the metal pin 334, cool air or warm air from the cooling room 310 cools and heats the metal pin 334, via the heat insulator 352 serving as the thermal relaxation member.

The metal pin 334, which serves as the atomization electrode cooler for cooling the atomization electrode 335, is cooled by cool air generated by the cooling room 310. Since the metal pin 334 is made of a metal piece having good heat conduction properties, the metal pin can be cooled enough only by heat conduction from the ventilation flue along which the cool air generated by the cooler 312 passes.

As described above, the structure for temperature adjustment (hereinafter, referred to also as an "adjustment unit") is simple. Thereby, it is possible to provide the atomization unit having less failures and high reliability. In addition, cooling sources of the refrigeration cycle can be used to cool the metal pin 334 and the atomization electrode 335. As a result, atomization can be performed with less energy.

It should be noted that the heat insulator 352 as a heat relaxation member covers at least a part of the metal pin 334 which is closer to the cooling unit, but the heat insulator 352 desirably covers the entire surface of the convex part 334A of the metal pin. If the heat insulator 352 covers the entire surface of the convex part 334A of the metal pin, heat hardly enters from a lateral direction perpendicular to a longitudinal direction of the metal pin 334 that is the atomization electrode cooler, and heat conduction occurs from an end part 334B of the convex part 334A to the longitudinal direction. As a result, the adjustment unit cools or heats the metal pin 334, firstly from the end part 334B that is the farthest from the atomization electrode 335.

Furthermore, in order to heat the metal pin 334, the metal pin heaters 358 are arranged in vicinity of the metal pin 334. Thereby, a temperature of the metal pin 334 can be changed, for example, by changing an applied voltage or a current-carrying rate.

The following describes operations of the refrigerator 300.

Firstly, an operation of the refrigeration cycle is described. The refrigeration cycle is operated, based on signals from the control unit, depending on temperatures set in the refrigerator, in order to perform a cooling operation. High-temperature and high-pressure refrigerant discharged by an operation of the compressor 309 is concentrated to be liquid at some degrees in the condenser. The generated liquid refrigerant passes along the sides and back of the body of the refrigerator 300 and a refrigerant tube arranged in a front entrance of the body of the refrigerator 300, thereby preventing dew condensation of the body of the refrigerator 300. Passing as described above, the liquid refrigerant is further concentrated to be liquid and reaches a capillary. After that, in the capillary, the liquid refrigerant is heat-exchanged with air in an inlet tube of the compressor 309 and also depressurized to be low-temperature and low-pressure liquid refrigerant that reaches the cooler 312. Here, the low-temperature and low-pressure liquid refrigerant is heat-exchanged with air in each of the storage compartments by an operation of the cooling fan 313. Thereby, the refrigerant in the cooler 312 is evaporated to be gas. At this time, the cooling room 310 generates cool air for cooling the storage compartments. The low-temperature cool air is distributed by the cooling fan 313 to the refrigerator compartment 304, the switch compartment 305, the ice compartment 306, the crisper 307, and the freezer compartment 308, by using the ventilation flue and dampers. Thereby, each of the storage compartments is cooled to have a temperature within a desired temperature zone. The cool air that has cooled the refrigerator compartment 304 is discharged to the crisper 307 via the crisper outlet 324. The crisper outlet 324 is provided on the way of the ventilation flue along which the cool air from the refrigerator compartment is circulated and returns to the cooler 312. The discharged cool air flows in the outer periphery of the upper storage container 320 and the lower storage container 319 to indirectly cool these containers. Then, the cool air returns to the cooler 312 via the crisper inlet 326. A temperature of the crisper 307 is controlled to be within a range from 2°C to 7°C, by allocating the cool air, or by turning ON/OFF the divider wall heaters 354 provided at the divider wall. It should be noted that the crisper 307 generally does not have a unit for detecting a temperature in the crisper.

The recess part is provided in the rear-side divider wall 311 at the rear side of the crisper 307. The electrostatic atomization device 331 is arranged in the recess part. Here, the deepest recess part 311B is provided at the back of the metal pin 334 in the atomization unit 339. The portion is thinner than any other portions of the heat insulator, having a thickness of approximately 2 mm to 10 mm, for example. Thereby, the thin portion of the heat insulator has a temperature lower than that of any other portions. In the refrigerator 300 according to the eighth embodiment, the above-described thickness is suitable for the heat relaxation member located between the metal pin and the adjustment unit. More specifically, the rear-side divider wall 311 has the recess part 311A, and at the bottom of the recess part 311A, there is the deepest recess part 311B. The convex part 33A of the metal pin 334 is engaged with the deepest recess part 311B, so that the atomization device 311 is engaged with and equipped to the recess part 311A.

Cool air is generated in the cooler 312 by the operation of the refrigeration cycle. By the cooling fan 333, the cool air having a temperature of approximately -15°C to -25°C flows to a freezer compartment outlet ventilation flue 341 at the back of the metal pin 334. The cool air cools the metal pin 334, which is the atomization electrode cooler, to have a temperature of approximately 0°C to -10°C by using heat conduction from the surface of the ventilation flue. Since the metal pin 334 is made of a good heat conductive material, the metal pin 334 conducts coldness and heat very easily. Thereby, the metal pin 334 cools the atomization electrode 335 fixed to the metal pin 334, to have a temperature of approximately 0°C to -10°C.

Here, the crisper 307 has a temperature within a range from 2°C to 7°C, and has a relatively high humidity due to evaporation from vegetables and the like. The atomization electrode 335 as the atomization tip has a temperature of 0°C or less. Water is generated on the atomization electrode 335 including the tip, and water drops are attached to them..

If a unit for detecting a temperature and/or a unit for detecting a humidity are provided in the crisper 307, it is possible to exactly calculate a dew point according to a change in the environment of the refrigerator.

The high voltage generation circuit 360 applies a high voltage of 4 kV to 10 kV, for example, between the electrodes 335 and 336, so that the atomization electrode 335 attached with the water drops has a potential lower than that of the opposite electrode 336. Here, corona discharge occurs between the electrodes 335 and 336, thereby attracting the water drops on the tip of the atomization electrode 335 to the center of the tip. The attracted water drops are atomized into fine particles by electrostatic energy, thereby producing electrically-charged fine mist together with ozone and OH radical. The fine mist is generated by Rayleigh fission and has a size of several nm, measured by units of nanometer, which human eyes cannot see. Here, the voltage applied between the electrodes is very high, ranging from 4 kV to 10 kV. However, a discharged current value of the above case is several µA, and as an input, 0.5 W to 1.5 W. Therefore, this very low input hardly influences a temperature of the compartment.

More specifically, when the atomization electrode 335 is at a reference potential (0V) and the opposite electrode 336 is applied wit a high voltage to have a potential (+7 kV), dew condensation water attached to the tip of the atomization electrode 335 is attracted to the center of the tip, thereby forming a substantial cone shape called a Taylor cone. Thereby, the dew condensation water approaches the opposite electrode 336, and thereby an air insulation layer is destroyed. As a result, electric discharge starts between the atomization electrode 335 and the opposite electrode 336. Here, the dew condensation water is electrically charged, and electrostatic force generated on surfaces of the water drops exceeds surface tension, thereby generating fine particles of the water. Since the opposite electrode 336 has a positive potential, the charged fine mist is attracted to the opposite electrode 336, and the fine particles are more refined by Rayleigh fission. As a result, the charged fine mist including radical is attracted to the opposite electrode 336. The charged fine mist has a size of several nm, measured by units of nanometer, which human eyes cannot see. The attracted fine mist is sprayed to the storage compartment by fictitious force.

The fine mist sprayed from the atomization device 331 is negatively charged. In the meanwhile, the crisper 307 stores greengroceries such as vegetables and fruits, including green leafy vegetables and fruits. The stored greengroceries are often rather wilted due to evaporation during transportation after shopping or evaporation during storing. The greengroceries are usually charged positively, and sprayed fine mist charged negatively is likely to be attracted to the surfaces of the vegetables. Therefore, the sprayed fine mist causes the crisper 307 to have high humidity again and is attached to the surfaces of the greengroceries. This suppresses evaporation of the greengroceries and increases their freshness. Moreover, the sprayed fine mist enters tissues of the vegetables and fruits from interspaces between cells, so as to re-supply water to the cells wilted due to evaporation. As a result, turgor pressure allows the wilted cells to be recovered to be fresh.

The generated fine mist includes ozone, OH radical, and the like, which have strong oxidizing power. Therefore, the generated fine mist can provide deodorization effect for the crisper, sterilization and bacterial killing effects for surfaces of the vegetables. At the same time, the generated fine mist provides oxidation decomposition effect for harmful substances such as agricultural chemicals, wax, and the like attached to the vegetable surfaces, and thereby removes the harmful substances.

When the atomization electrode 335 is not attached with any water, an electric-discharge distance is increased to fail to destroy air insulation. Thereby, electric discharge does not occur. On the other hand, when the atomization electrode 335 is attached with excessive water from too much dew condensation, the electrostatic energy for atomizing the water drops into fine particles is weaker than surface tension. Thereby, discharge phenomenon does not occur. As a result, current does not flow between the atomization electrode 335 and the opposite electrode 336, which makes it possible to suppress discharge energy. Therefore, it is safe even if flammable refrigerant is leaked.

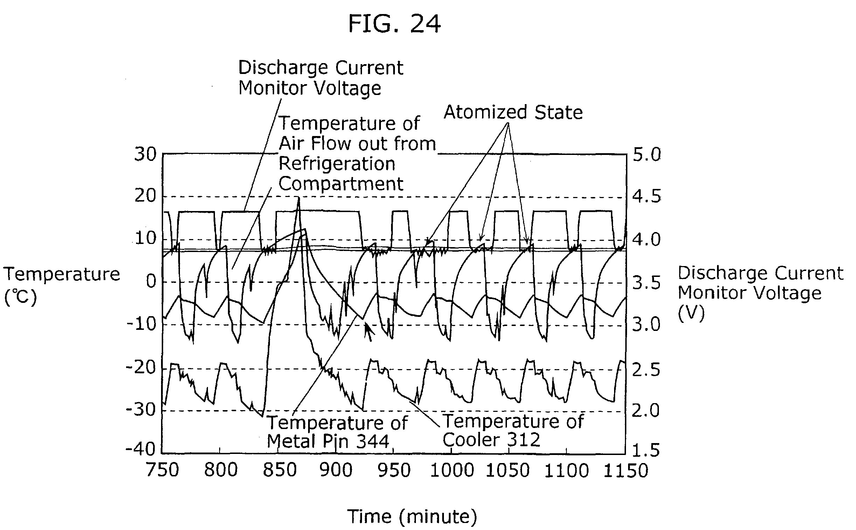

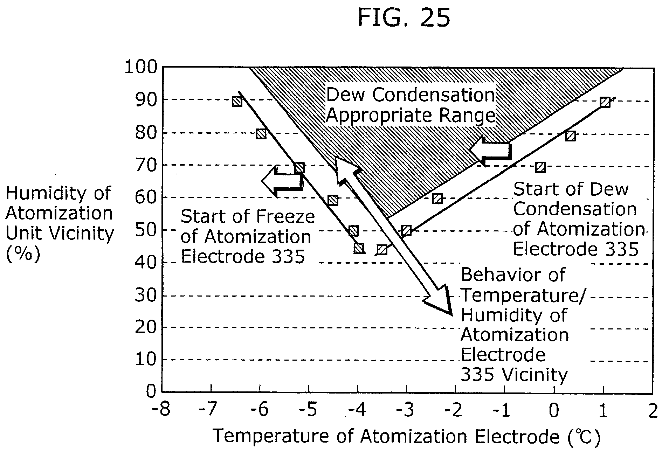

FIG. 24 shows a temperature and a voltage value obtained by monitoring discharge current, regarding the atomization electrode 335. The voltage value represents a state of atomization. FIG. 25 shows a temperature of the atomization electrode 335 and a humidity of vicinity of the atomization electrode 335, and also shows an appropriate range of the temperature and the humidity.

In FIG. 24, a horizontal axis represents a time, and a right vertical axis represents a voltage value converted from a discharged current value of discharge current flowing between the electrodes 335 and 336 when electric discharge occurs. The voltage value is set to be decreased, only when current flows between the electrodes, in other words, only when discharge phenomenon occurs to generate fine mist.

In the refrigerator 300, the crisper 307 starts being cooled, when a temperature of the cooler 312 starts lowering, in other words, when the refrigeration cycle starts operating. Here, since cool air flows also to the crisper 307, the crisper 307 is dried and the atomization electrode 335 is also dried.

Next, when a damper for the refrigerator compartment (refrigerator compartment damper) is closed, a temperature of air discharged to the refrigerator compartment rises, and thereby temperature and humidity of the refrigerator compartment 304 and the crisper 307 also rise. In this situation, since a temperature of the cool air discharged to the freezer compartment is gradually lowered, the metal pin 334 is further cooled. Therefore, the atomization electrode 335 of the atomization unit 339 located in the crisper 307 in the environment that is changed to have high humidity is likely to have dew condensation. Then, water drops grow at the tip of the atomization electrode 335. If a distance between a tip of the water drops and the opposite electrode 336 reaches a certain distance, the air insulation layer is destroyed and discharge phenomenon occurs. As a result, fine mist is sprayed from the tip of the atomization electrode 335. Here, minute current flows between the electrodes, and thereby the voltage value is decreased as shown in FIG. 24. Then, although the compressor 309 and the cooling fan 313 stop and the temperature of the metal pin 334 rises, an atmosphere of the atomization unit 339 is still high humidity. Furthermore, since the metal pin 334 has a large heat capacity, the temperature of the metal pin 334 is not changed dramatically and dynamically. Therefore, the atomization continues.

Then, when the compressor 309 starts operating again, the refrigerator compartment damper is opened, and cool air starts being transported by the cooling fan to each of the storage compartments. As a result, the inside of each storage compartments is changed to have a low humidity. Thereby, the atomization unit also has low humidity, the atomization electrode 335 is dried, and water drops at the atomization electrode 335 are reduced or disappear.

In the normal cooling state of the refrigerator, the above-described cycle of the operation is repeated to adjust, within a certain range, water drops at the tip of the atomization electrode 335.

However, when frost and ice attached to the cooler 312 are defrosted to be melted away and removed, the temperature of the cooler 312 exceeds 0°C. Here, a temperature of the ventilation flue outlet ventilation flue at the back of the electrostatic atomization device 331 also rises. With the temperature rise, the temperature of the metal pin 334 rises, the temperature of the atomization electrode 335 also rises, the dew condensation water attached to the tip is evaporated, and the atomization electrode is dried.

A defrosting heater is generally turned OFF when the temperature of the cooler rises at certain degrees. Therefore, the temperatures of the electrode 335 and the metal pin 334 do not rise too high. Since the temperatures of the electrode 335 and the metal pin 334 can be surely increased within respective appropriate rangers, it is possible to provide a protection function of surely preventing that flammable refrigerant reaches a temperature allowing the flammable refrigerant to be ignited.

The refrigerator 300 according to the eighth embodiment, a structure for heating includes the metal pin heaters 358 as well as the defrosting heater. The structure for heating in the adjustment unit may have only the defrosting heater, not including the metal pin heaters 358. Even if excessive dew condensation occurs, the atomization electrode 335 as the atomization tip is heated via the metal pin 334 in defrosting the cooler. As a result, it is possible to easily remove excessive water drops without having a special structure. As described, the adjustment unit does not have any special heater but uses the defrosting heater provided in the refrigeration cycle. Since any special device or power are not necessary, mist spraying can be achieved with less material and less energy. In addition, the above structure can be used to defrost the cooler, which further increases reliability.

In consideration of the actual use state of the refrigerator 300, a humidity state and a humidification amount of the crisper 307 vary depending on the use environment, opening/closing operation, and food storage state. Therefore, an amount of dew condensation water attached to the atomization electrode as the atomization tip is sometimes too large. If an amount of the dew condensation water is large to cover the entire surface of the atomization electrode 335, the electrostatic energy caused by electric discharge is not greater than surface tension, which fails atomization. Therefore, when the refrigerator compartment damper is opened, humidity is removed by cool air, and at the same time, the metal pin heaters 358 as heating units are conducted to heat the atomization electrode 335. As a result, evaporation of the attached water drops is facilitated. Surface tension is reduced by reducing an amount of water drops by evaporating the water drops, thereby facilitating mist spraying and also preventing excessive dew condensation. Thereby, atomization can be performed continuously and steadily. It is also possible to prevent quality deterioration caused when water drops grow due to excessive dew condensation and fall along the rear-side divider wall 311.

In the eighth embodiment, the metal pin 334 is cooled only by heat conduction from the ventilation flue along which the cool air generated by the cooler 312 flows. If the flammable refrigerant is leaked, the most of the refrigerant is accumulated near the cooler 312 in the refrigerator 300. The cooler 312 is separated as a different area from the crisper 307 that is a storage compartment in which the high voltage generation circuit 360 and the atomization electrode 335 are placed. Therefore, in the refrigerator 300, refrigerant near the cooler 312 is not leaked to the area around the atomization device 331.

As described above, the atomization electrode 335 repeats dew condensation and drying by using the refrigeration cycle of the refrigerator 300, in order to perform spraying intermittently. This makes it possible to adjust an amount of water at the tip of the atomization electrode 335, prevent excessive dew condensation, and achieve continuous atomization with an appropriate sprayed amount.

It is also possible that, when atomization is achieved with the appropriate sprayed amount, a discharge control unit varies a discharge voltage so as to set a predetermined discharged current value. Thereby, the discharged current value increasing discharge energy is suppressed low to adjust the discharge energy to be reduced and the discharge voltage to be increased. By this feedback control, water can be atomized using stable discharge energy of a predetermined amount. As described above, by suppressing discharged current to be equal to or less than a certain value, discharge energy can be suppressed, which provides safety. The protection unit according to the eighth embodiment produces a protection function of reducing an amount of discharge energy in the manner as described above.

The above is described in more detail below. As shown in FIG. 21, the atomization device 331 is operated when a voltage supplied from the control circuit 346 of the refrigerator 300 is boosted by the step-up transformer 361 to be a predetermined voltage to be outputted. Here, the discharge voltage detection circuit 362 detects a discharge voltage value S1, and the discharged current detection circuit 363 detects a discharged current value S2. A discharge current value determination circuit 365 makes determination on the values S1 and S2 detected by the detection circuits 362 and 363, respectively. The high voltage output control circuit 364 sends a signal S3 to the step-up transformer 361 to adjust a discharge voltage, thereby controlling the discharged current value S2 to be a predetermined value.

Here, as a discharge current monitor voltage value which is obtained by converting the discharged current value S2 to a voltage, a signal S4 is sent to the control circuit 346 of the refrigerator 300. Then, the discharge current value determination circuit 365 determines a state of atomization. The control circuit 346 of the refrigerator 300 determines whether or not the received signal S4 is within a predetermined range. If the received signal S4 is within the predetermined range, then the signal S5 instructing to apply a high voltage (high voltage output ON) is sent to the high voltage generation circuit 360 and thereby the atomization continues. On the other hand, if the determination is made that the received signal S4 is not within the predetermined range, in other words, if the atomization electrode 335 is attached with no water or excessive water to fail discharge as described previously or if abnormal electric discharge occurs, the signal S15 instructing not to apply a high voltage (high voltage output OFF) is sent to the high voltage generation circuit 360 to stop the atomization.

If atomization is stopped when the atomization electrode 335 is attached with no water or excessive water to fail discharge, energy can be saved. If abnormal electric discharge occurs, the above-described control can serve for explosion protection. In this situation, when the discharged current value is not within a predetermined range, the structure for discharge suppression stops application of a high voltage to stop the atomization device 331.

In the meanwhile, since the refrigeration cycle is made of a plurality of parts which are jointed to one another. This structure has a risk of leakage of refrigerant sealed in the refrigeration cycle from joints caused by a certain factor. In a situation where flammable refrigerant isobutene (R600a) is leaked, a concentration of the refrigerant around the atomization device 331 is increased. In the eighth embodiment, however, the atomization device 331 generates corona discharge with a discharge voltage of approximately 7 kV and discharge current having a small value of approximately 2 µA between the electrodes 335 and 336 in normal operations. Therefore, it is possible to generate electric discharge having quite little discharge energy. As a result, refrigerant is not ignited. In the above-described manner, by reducing an amount of discharge energy, the atomization device 331 that generates little corona discharge can provide a protection unit for preventing refrigerant from being ignited.

If flammable refrigerant isobutene (R600a) is leaked from the refrigeration cycle when the compressor is stopped, the refrigerant is accumulated downwards, because the refrigeration is heavier than air. In this situation, there is a possibility that the refrigerant is leaked from the rear-side divider wall 311 into a compartment. Especially when refrigerant is leaked from the cooler 312 having a large amount of accumulated refrigerant, an amount of leakage would be large. However, the crisper 307 provided with the electrostatic atomization device 331 as the atomization device is located above the cooler 312. Therefore, if refrigerant is leaked, the refrigerant does not reach the crisper 307.

Even if refrigerant is leaked into the crisper 307, the refrigerant is accumulated in a lower portion of the crisper 307 because the refrigerant is heavier than air. Therefore, the refrigerant immediately flows out from the crisper via the crisper inlet 326 provided below the atomization device 331. Thereby, there is an extremely low possibility that concentration of the refrigerant near the electrostatic atomization device 331 as the atomization device reaches a degree allowing the refrigerant to be flammable.

In the eighth embodiment, the crisper inlet 326 is provided in a lower portion of the rear-side divider wall 311 located at the rear side of the crisper which is a wall surface provided with the atomization device 331. The structure allows flammable refrigerant leaked to the crisper 307 to immediately flow out from the crisper via the crisper inlet 326. Therefore, the flammable refrigerant is most unlikely to be accumulated near the atomization device 331. Furthermore, there is an extremely low possibility that concentration of the refrigerant near the atomization device 331 reaches a degree allowing the refrigerant to be flammable.

As described above, since the atomization device 331 is located in an upper portion of the rear side of the crisper 307, there is an extremely low possibility that concentration of refrigerant near the atomization device 331 reaches a degree allowing the refrigerant to be flammable. For flammable refrigerant such as isobutene which is likely to be accumulated downwards, it is effective that the atomization device 331 is located below a half of a height of the storage compartment (the crisper) in which the atomization device 331 is provided.

As described above, cool air is provided to the refrigerator compartment 304 from the cooling room via the ventilation flue, and cools the inside of the refrigerator compartment 304. After that, the cool air enters the crisper 307 via the crisper outlets 324 to cool the inside of the crisper 307. Then, the cool air in the crisper 307 exits the crisper 307 from the crisper inlets 326 and returns to the cooling room 310. The crisper 307 is located the most downstream of the ventilation flue for cool air. In the situation where flammable refrigerant is leaked, there is a possibility that concentration of refrigerant is increased because the cooling room 310 has a large amount of accumulated refrigerant. In the eighth embodiment, however, even if refrigerant leakage occurs in the cooling room 310, the refrigerant does not enter directly the crisper 307 from the cooling room 310. The refrigerant is firstly diffused to flow to the refrigerator compartment 304 located upstream of the ventilation flue more than the crisper 307. Therefore, refrigerant having low concentration enters the crisper 307. As a result, there is an extremely low possibility that concentration of the refrigerant near the atomization device 331 provided in the crisper 307 reaches a degree allowing the refrigerant to be flammable.

Error of the high voltage generation circuit 360, an extremely short distance between the electrodes 335 and 336 resulting from foreign substances attached to the electrodes, or the like would cause abnormal electric discharge called arc discharge. In this situation, insulation of air layer is damaged to flow excessive current, thereby increasing discharge energy.

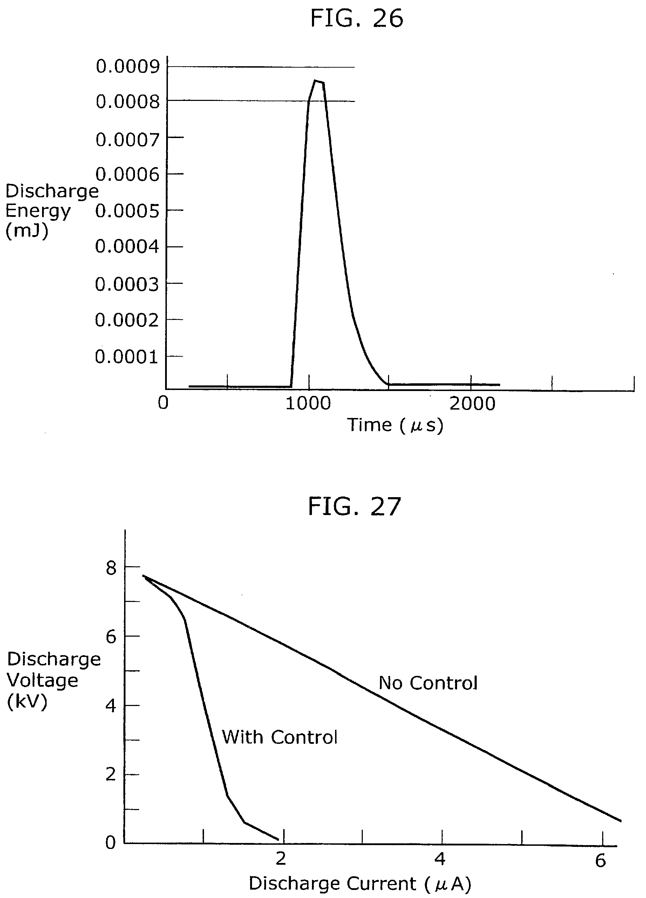

FIG. 26 shows discharge energy assuming that the atomization device 331 has error. FIG. 27 shows a relationship between a high voltage and discharge energy of the atomization device 331.

It is assumed that the high voltage generation circuit 360 cannot control application of a high voltage thereby increasing current and at the same time a foreign substance is attached to the electrodes 335 and 336 to shorten a distance between the electrodes. A wire as the foreign substance is placed between the electrodes 335 and 336, so as to generate arc discharge on purpose under an atmosphere of isobutene concentration of 3.1 vol % ± 0.2 vol %. In the above situation, discharge energy is measured.

It is said that minimum ignition energy required to ignite isobutene gas is 0.3 mJ when concentration of isobutene gas in air is 3.1 vol % ± 0.2 vol %. As shown in FIG. 26, even in an abnormal state where arc discharge occurs between the electrodes 335 and 336, discharge energy is very small 0.0009 mJ that is approximately 1/300 of the minimum ignition energy. Therefore, in the refrigerator 300 having the atomization device 331 according to the eighth embodiment, isobutene gas is not ignited even in such an abnormal state.

As described above, even under the severest assumption of error, the atomization device 331 can suppress discharge energy to be approximately 1/300 of the minimum ignition energy for isobutene as flammable refrigerant. Therefore, even if the refrigeration cycle is provided to a real machine of the refrigerator using flammable refrigerant, adequate safety design is possible. As a result, it is possible to ensure high reliability of general-purpose refrigerators.

As described above, the opening 338 is provided at the bottom of the case 337 covering the atomization unit. Even if isobutene enters the case 337, the isobutene immediately flows out from the opening 338. In addition, all of liquid accumulated in the case 337 flows out from the opening 338.

In the atomization device 331, the cooling pin 334 causes dew condensation on the atomization electrode 335. If water of excessive dew condensation on the atomization electrode 335 is accumulated in the case 337, or if a part of sprayed mist contacts the inside of the case 337 and is therefore accumulated in the case 337, there is a possibility that the opposite electrode 335 and the opposite electrode 336 are submerged in the accumulated water, and that the high voltage generation unit 360 is submerged in the accumulated water.

In the above situation, if, needless to say, the high voltage generation circuit 360 or the like operates erroneously or is damaged, or if the water accumulated in the case 337 is leaked from the opening 338, the water causes short circuit between the electrodes 335 and 336. The water flows out from the opening 338 at the bottom of the case 337, and does not stay in the case 337.

Since the storage compartment does not have any surface directly contacting the refrigerant tube and the like, the refrigerant is not leaked to the storage compartment. Therefore, flammable refrigerant is not ignited.

The high voltage generation circuit further includes an current fuse 366 serving as a structure for suppressing electric discharge (discharge suppression unit). For example, if excessive current flows when an foreign substance is attached between the electrodes to cause short circuit, power supply to the atomization device is stopped to suppress discharge energy caused by the excessive current, thereby preventing errors caused by heating or the like.

As described above, the step-up transformer provided in the high voltage generation circuit is molded of resin such as epoxy resin. Therefore, even if refrigerant is leaked and then filled and accumulated in the atomization device, a part of the step-up transformer that would be an ignition source is not exposed. As a result, further safety is ensured.

The high voltage generation circuit is electrically connected to the atomization electrode included in the atomization unit, and the connection unit is molded of resin such as epoxy resin as sealer to be covered by the resin. The above structure can prevent abnormal heating and the like caused by, for example, defects in equipping the atomization electrode and the connection unit. Therefore, even if refrigerant is leaked and then filled and accumulated in the atomization device, a part that would be an ignition source is not exposed. As a result, further safety is ensured.

The high voltage generation circuit is partitioned from the atomization unit in the case. The voltage generation circuit and the atomization unit are covered separately. Therefore, even if refrigerant is filled and accumulated in the atomization device, a part of the case that would be an ignition source is insulated independently from other parts, in other words, separated from other parts by the divider 372. As a result, still further safety is ensured.

The case is made of a flame resistance material. Therefore, in a situation where fire occurs, it is possible to prevent the fire from spreading. As a result, further safety is ensured.

As described previously, in the eighth embodiment, as a discharge current monitor voltage value which is obtained by converting a discharged current value to a voltage, a signal is sent to the control circuit of the refrigerator. According to the signal, the control circuit determines a state of atomization. Based on the determination of the control circuit, application of a high voltage is controlled to be turned ON or OFF. However, it is also possible to control supply of a voltage to the high voltage generation circuit 360 to be turned ON or OFF.

The atomization unit according to the eighth embodiment generates mist by electrostatic atomization. The atomization unit polarizes water drops into fine particles by using electric energy such as a high voltage, thereby generating fine mist. The generated mist is electrically charged. Therefore, the mist is generated to have a potential opposite to that of items such as vegetables and fruits to which the mist is to be attached. For example, mist charged negatively is sprayed to vegetables charged positively. Thereby, force of attachment to the vegetables and fruits is increased. As a result, it is possible to attach the mist to the surfaces of the vegetables and the like more homogeneously, and to increase the attachment force more than that of mist that is not electrically charged. Moreover, the sprayed fine mist can be sprayed directly to food in the crisper. Thereby, the fine mist can be attached to the surfaces of the vegetables by using potentials of the fine mist and the vegetables. As a result, it is possible to efficiently increase freshness of the stored items.

In the eighth embodiment, since mist includes radical, it is possible to decompose and remove agricultural chemicals, wax, and the like attached to the vegetable surfaces, by using an extremely little water. As a result, water can be saved and input can be reduced.

In the eighth embodiment, the refrigerator includes the cooler for cooling the storage compartments and the divider wall for separating and heat-insulating the cooler from the storage compartments. The electrostatic atomization device as the atomization device is provided at the divider wall so that the electrostatic atomization device is located in a space in such a storage compartment. Thereby, a storage space is not reduced and a human hand does not easily reach the atomization device provided at the rear side of the compartment. As a result, safety is improved.

In the eighth embodiment, the metal pin made of a metal piece having good heat conduction properties serves as the adjustment unit that cools and heats the atomization electrode in the electrostatic atomization device as the atomization device to adjust an amount of dew condensation at the tip of the atomization electrode. (a) Heat conduction from the ventilation flue along which cool air generated by the cooler flows and (b) a heater as a heating unit serve as a structure for cooling and heating the metal piece. Therefore, by adjusting a thickness of the heat insulator and an input value of the heater, the temperatures of the metal pin and the atomization electrode can be easily set. In addition, the refrigerator has (a) the heat insulator between the atomization device and the heating unit to prevent cool air from escaping and (b) the heating unit such as the heater. Thereby, it is possible to prevent that reliability is decreased due to frost or dew condensation attached to the outer surface of the case.

In the eighth embodiment, the rear-side divider wall provided with the electrostatic atomization device as the atomization device has the recess part at the side facing the storage compartment. A metal piece, which serves as a structure for adjusting a water amount (a water amount adjustment unit) of the electrostatic atomization device as the atomization device, is inserted into the recess part. Thereby, the above structure does not influence a storage capacity of storing greengroceries and food. A portion except the portion to which the electrostatic atomization device as the atomization device is equipped has a thickness enough for providing heat insulation properties. Therefore, it is possible to prevent dew condensation in the case. As a result, reliability is increased.

It should be noted that it has been described in the eighth embodiment that a high-voltage potential difference occurs between the atomization electrode having a reference potential (0V) and the opposite electrode having a potential (+7 kV). However, it is also possible that a high-voltage potential difference occurs between the opposite electrode having a reference potential (0V) and the atomization electrode having a potential (-7 kV). In the above situation, the opposite electrode, which is closer to the storage compartment than the atomization electrode is, has the reference potential. Therefore, even if a human approaches the opposite electrode, electric shock does not occur. Moreover, if the atomization electrode has a potential of -7 kV and the storage compartment has the reference potential, the opposite electrode is sometimes not necessary.

It should also be noted that it has been described in the eighth embodiment that the ventilation flue for cooling the metal pin is the freezer compartment outlet ventilation flue. However, the ventilation flue for cooling the metal pin may be a low-temperature ventilation flue such as a ventilation flue along which cool air flows out to the ice compartment, or a ventilation flue along which cool air from the freezer compartment returns to the cooling room. Thereby, it is possible to enlarge an area where the electrostatic atomization device as the atomization device can be located.

It should also be noted that it has been described in the eighth embodiment that air, which is cooled by a cooling source generated by the refrigeration cycle of the refrigerator, cools the metal pin. However, it is also possible that the metal pin is cooled by heat conduction from the cooling tube by using cool air or a cool temperature generated from the cooling source of the refrigerator. Thereby, by adjusting a temperature of the cooling tube, it is possible to cool the atomization electrode cooler to have a desired temperature. As a result, temperature can be easily managed when the atomization electrode is cooled.

It should also be noted that in the eighth embodiment there is no water holder around the atomization electrode in the electrostatic atomization device as the atomization device. However, such a water holder may be provided. The water holder can hold, near the atomization electrode, dew condensation water generated around the atomization electrode. Thereby, it is possible to supply water to the atomization electrode at appropriate timing.

It should also be noted that it has been described in the eighth embodiment that the crisper represents a storage compartment in the refrigerator, the storage compartment may be the refrigerator compartment, the switch compartment, or any other compartment having a different temperature zone. In the situation, development with various usages can be achieved.

It should also be noted that it has been described in the eighth embodiment that the pin made of a metal is used, but anything can be used as far as it is made of a good heat conductive material. For example, a polymeric material having high heat conduction properties can be used. In this situation, weight saving and workability are enhanced, and the structure can be manufactured at a low cost.

### (Ninth Embodiment)

The common parts.in the structure and techniques between the already-described first to eighth embodiments and the ninth embodiment are not described in detail again in the ninth embodiment. In addition, if any of the techniques already described in the first to eighth embodiments can be applied in the ninth embodiment, any combination of (a) the techniques and the structure already described in the first to eighth embodiments and (b) those of the ninth embodiment is possible.

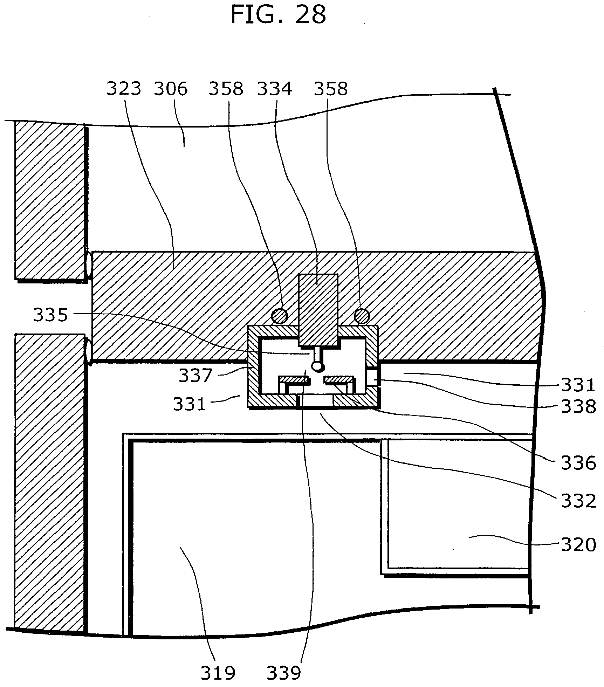

FIG. 28 is a cross-sectional view of the atomization device 331 according to the ninth embodiment. The same reference numerals regarding the refrigerator according to the eighth embodiment are assigned to the identical parts regarding the refrigerator shown in FIG. 28, so that the identical parts are not explained again below.

As shown in FIG. 28, the atomization device 331 is embedded in the heat-insulating divider wall 323 that separates the crisper 307 from the ice compartment 306. The divider wall 323 has a recess part. The metal pin 334, which is an atomization electrode cooler for cooling the atomization electrode 335 in the atomization unit 339, is provided to the recess part of the divider wall where the heat insulator has the recess shape. The metal pin heaters 358 are located in vicinity of the recess part.

The refrigerator according to the ninth embodiment is described below.

A thickness of the recess part 323A of the divider wall 323 provided with the electrostatic atomization device 331 is thinner than any other portions of the rear-side divider wall 331. A thickness of the deepest recess part 323B to which the metal pin 334 is equipped is thinner than the thickness of the recess part 323A. Therefore, the metal pin 334 is cooled by heat conduction from the ice compartment having a relatively low temperature, thereby cooling the atomization electrode 335. Here, if a temperature of the tip of the atomization electrode 335 is set to be a dew point or lower, moisture around the atomization electrode 335 is changed to dew condensation on the atomization electrode 335. As a result, water drops can be surely generated.

There is a situation where a temperature of the ice compartment 306 varies due to variation of an outside air temperature, seedy ice-making, or the like, which cools the atomization electrode 335 too much. In order to address the situation, the metal pin heaters 358 near the atomization electrode 335 adjust the temperature of the atomization electrode 335 in order to optimize an amount of water at the tip of the atomization electrode 335.

If a unit for detecting a temperature and/or a unit for detecting a humidity are provided in the refrigerator, it is possible to exactly calculate a dew point according to a change in the environment of the refrigerator.

In the above situation, the atomization electrode 335 is set to have a negative voltage and the opposite electrode 336 is set to have a positive voltage, and the high voltage generation circuit 360 applies a high voltage (for example, 7.5 kV) between the electrodes. Thereby, an air insulation layer is destroyed between the electrodes and eventually corona discharge occurs, which atomizes water at the tip of the atomization electrode 335. As a result, electrically-charged fine mist is generated together with ozone and OH radical. The fine mist has a size of less than 1 µm, measured by units of nanometer, which human eyes cannot see.

The generated fine mist is sprayed into the crisper 307. The fine mist sprayed from the atomization device 331 is negatively charged. In the meanwhile, the crisper stores greengroceries such as vegetables and fruits, including green leafy vegetables and fruits. The stored greengroceries are often rather wilted due to evaporation during transportation after shopping or evaporation during storing. The greengroceries are usually charged positively, and sprayed fine mist charged negatively is likely to be attracted to the surfaces of the vegetables. Therefore, the sprayed fine mist causes the crisper to have high humidity again and is attached to the surfaces of the greengroceries. This suppresses evaporation of the greengroceries and increases their freshness. Moreover, the sprayed fine mist enters tissues of the vegetables and fruits from interspaces between cells, so as to re-supply water to the cells wilted due to evaporation. As a result, turgor pressure allows the wilted cells to be recovered to be fresh.

The generated fine mist includes ozone, OH radical, and the like, which have strong oxidizing power. Therefore, the generated fine mist can provide deodorization effect for the crisper, sterilization and bacterial killing effects for surfaces of the vegetables. At the same time, the generated fine mist provides oxidation decomposition effect for harmful substances such as agricultural chemicals, wax, and the like attached to the vegetable surfaces, and thereby removes the harmful substances.

If flammable refrigerant isobutene is leaked from the refrigeration cycle when the compressor is stopped, the refrigerant is accumulated downwards, because the refrigeration is heavier than air. In this situation, there is a possibility that the refrigerant is leaked from the rear-side divider wall 311 into a compartment. Especially when refrigerant is leaked from the cooler 312 having a large amount of accumulated refrigerant, an amount of leakage would be large. However, the crisper 307 provided with the electrostatic atomization device 331 is located above the cooler 312. Therefore, if refrigerant is leaked, the refrigerant does not reach the crisper 307. As described above, in the ninth embodiment, the crisper 307 provided with the atomization device 331 is located above the cooler 312. This structure also serves as a protection unit.

Even if refrigerant is leaked into the crisper 307, the refrigerant is accumulated in a lower portion of the crisper 307 because the refrigerant is heavier than air. Since the atomization device 331 is provided at the ceiling of the crisper 307, there is an extremely low possibility that concentration of the refrigerant near the electrostatic atomization device 331 as the atomization device reaches a degree allowing the refrigerant to be flammable.

As described above, the refrigerator according to the ninth embodiment includes the divider wall separating the storage compartment (crisper) from another area, and a low-temperature storage compartment is located at a ceiling side of the storage compartment. The atomization device is provided at the divider wall at the ceiling side. If a storage compartment having a freezing temperature zone, such as the freezer compartment or the ice compartment, is located above the crisper, the atomization device is provided at the divider wall of the ceiling separating the crisper from the storage compartment having the freezing temperature zone. Thereby, the atomization device can cool the atomization electrode to generate dew condensation. In the ninth embodiment, a special cooling device is not necessary and water can be sprayed from the ceiling. Thereby, it is easy to spread the sprayed water into the entire crisper 307, and it is difficult for a human hand to touch the atomization device.

The atomization device is located above an evaporator included in the refrigeration cycle. Thereby, even if flammable refrigerant such as isobutene or propane is leaked from the evaporator, the refrigerant is not filled in the crisper because the refrigerant is heavier than air.

The atomization device is located in an upper portion of the crisper 307. Thereby, if refrigerant is leaked, the refrigerant is accumulated in a lower portion of the crisper 307 as the storage compartment. As a result, the refrigerant is not ignited. As described above, the atomization device provided at the ceiling serves as a protection unit that prevents flammable refrigerant from being ignited.

Since the storage compartment does not have any surface directly contacting a refrigerant tube and the like, the refrigerant is not leaked to the storage compartment. Therefore, flammable refrigerant is not ignited.

The atomization unit according to the ninth embodiment generates mist by electrostatic atomization. The atomization unit polarizes water drops into fine particles by using electric energy such as a high voltage, thereby generating fine mist. The generated mist is electrically charged. Therefore, the mist is generated to have a potential opposite to that of items such as vegetables and fruits to which the mist is to be attached. For example, mist charged negatively is sprayed to vegetables charged positively. Thereby, force of attachment to the vegetables and fruits is increased. As a result, it is possible to attach the mist to the surfaces of the vegetables and the like more homogeneously, and to increase the attachment force more than that of mist that is not electrically charged. Moreover, the sprayed fine mist can be sprayed directly to food in the crisper. Thereby, the fine mist can be attached to the surfaces of the vegetables by using potentials of the fine mist and the vegetables. As a result, it is possible to efficiently increase freshness of the stored items.

In the ninth embodiment, since mist includes radical, it is possible to decompose and remove agricultural chemicals, wax, and the like attached to the vegetable surfaces, by using an extremely little water. As a result, water can be saved and input can be reduced.

### (Tenth Embodiment)

The common parts in the structure and techniques between the already-described first to ninth embodiments and the tenth embodiment are not described in detail again in the tenth embodiment. In addition, if any of the techniques already described in the first to ninth embodiments can be applied in the tenth embodiment, any combination of (a) the techniques and the structure already described in the first to ninth embodiments and (b) those of the tenth embodiment is possible.

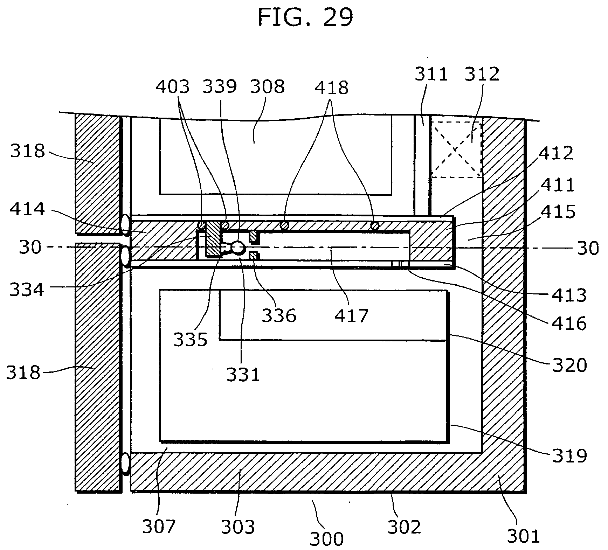

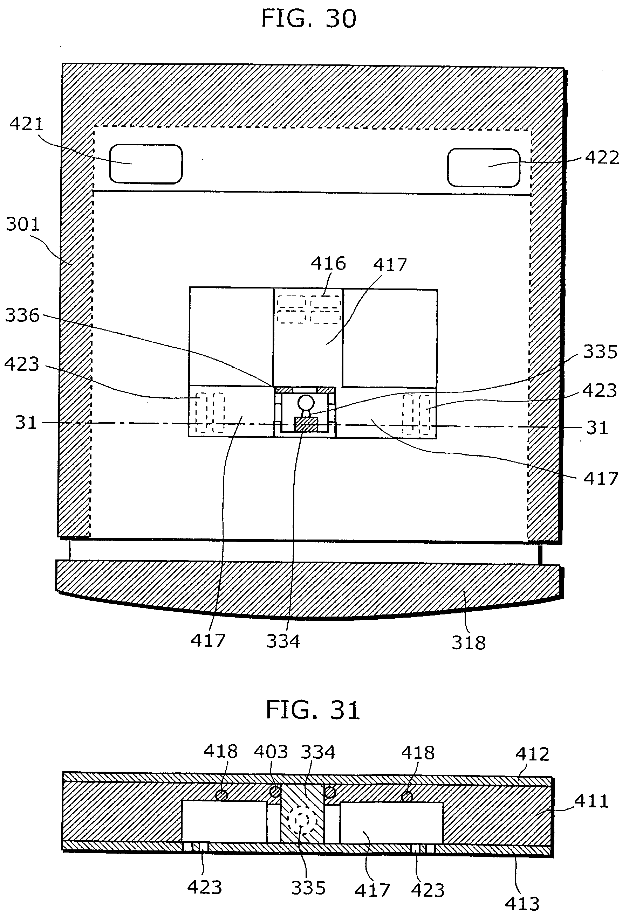

FIG. 29 is a cross-sectional view of a refrigerator according to the tenth embodiment. FIG. 30 is a cross-sectional view of the refrigerator taken along line 30-30 of FIG. 29. FIG. 31 is a cross-sectional view of the refrigerator taken along line 31-31 of FIG. 30.

The same reference numerals regarding the refrigerators according to the eighth embodiment are assigned to the identical parts of the refrigerator shown in FIGS. 29 to 31, so that the identical parts are not explained again below.

In the refrigerator according to the tenth embodiment, the crisper 307 is the lowest compartment. Above the crisper 307, there is the freezer compartment 308 or the ice compartment having a temperature set within the freezing temperature zone. A divider wall partitions the crisper 307 from the freezer compartment 308 to separate them from each other as different storage compartments.

The cooling room 310 is provided at the back of the freezer compartment 308 and generates cool air. Between the freezer compartment 308 and the cooling room 310, there are a transportation ventilation flue and the rear-side divider wall 311. The transportation ventilation flue has heat insulation properties and transports cool air to the respective compartments. The rear-side divider wall 311 separates and heat-insulates the compartments from one another.

The cool air generated by the cooler 312 in the cooling room 310 is transported to each of the compartments by using the cooling fan 313. The cool air generated by the cooler 312 above the crisper 307 flows into the crisper 307 from a crisper outlet ventilation flue 422, directly or via a ventilation flue along which the cool air is heat-exchanged in another compartment and then returns to the cooler 312. Then, the cool air returns to the cooler 312 from the crisper 307 via a crisper inlet ventilation flue 421.

A divider wall 414 is provided at an upper surface of the crisper 307, in order to separate the crisper 307 from the freezer compartment 308.

The divider wall 414 includes: a divider plate 413 facing the crisper 307; a divider plate 412 facing the freezer compartment 308; a heat insulator 411 provided between the divider plates 412 and 413. The heat insulator 411 is made of a heat-insulating material such as foam polystyrene or urethane for providing heat insulation between the crisper 307 and the freezer compartment 308. The divider plates 412 and 413 are made of resin such as ABS resin. The divider plate 413, which is located an upper side of the crisper 307, has a recess part. The recess part has a temperature lower than a temperature of any other portions of the divider plate 413. The atomization device 331 and a mist ventilation flue 415 are provided in the recess part.

The atomization device 331 mainly includes the atomization unit 339 and the high voltage generation circuit 360. The atomization unit 339 has the atomization electrode 335. The atomization electrode 335 is fixed to the metal pin 334. The metal pin 334 is made of a good heat conductive material such as aluminum, stainless steel, or brass, and serves as an atomization electrode cooler for cooling the atomization electrode 335. The atomization electrode 335 is connected to a voltage applying unit via the metal pin 334.

The atomization device 331 is arranged in an upper portion of the crisper 307. Thereby, even if flammable refrigerant such as isobutene or propane is leaked from the refrigeration cycle, the refrigerant is accumulated in a lower portion of the crisper 307 and not filled in vicinity of the atomization device 331 because the refrigerant is heavier than air. Thereby, ignition of the flammable refrigerant is prevented. As a result, the atomization device 331 provided in an upper portion of the crisper 307 serves as a protection unit that prevents flammable refrigerant from being ignited.

Since the area provided with the atomization device does not have any surface directly contacting a refrigerant tube and the like, refrigerant is not leaked directly to the area. Therefore, flammable refrigerant is not leaked directly to the area to ignite the atomization device.

The metal pin 334 serving as the atomization electrode cooler has a large heat capacity of 50 times or more, preferably 100 times or more as much as a heat capacity of the atomization electrode 335. The metal pin 334 is preferably made of a high heat conductive material such as aluminum or copper. In order to conduct coldness/heat from one end to the other end of the metal pin 334 by using heat conduction, it is desirable that the metal pin 334 is covered by a heat insulator.

It is necessary to keep heat conduction between the atomization electrode 335 and the metal pin 334 for a long time. Therefore, epoxy material or the like is filled into the connection unit between the atomization electrode 335 and the metal pin 334 in order to prevent entry of water or the like. The epoxy resin suppresses thermal resistance and fixes the atomization electrode 335 to the metal pin 334. It is also possible to insert the atomization electrode 335 to the metal pin 334 so as to reduce the thermal resistance.

Moreover, the metal pin 334 as the atomization electrode cooler needs to conduct a cool temperature in the heat insulator that is used to provide heat insulation between the storage compartment and the cooler 312 or the ventilation flue. Therefore, it is desirable that the metal pin 334 has a length that is 5 mm or more, and preferably 10 mm or more. However, if the length of the metal pin 334 is 30 mm or more, the heat conduction effect is reduced and, at the same time, the divider wall needs to be thick which reduces a storage area in the refrigerator.

Meanwhile, since the atomization device 331 provided in the storage compartment is in an environment of high humidity, the humidity would influence the metal pin 334. Therefore, it is preferable that the metal pin 334 is made of a metal material having corrosion resistance properties and rust resistance properties, or a material applied with surface processing such as alumite treatment or coating.

The metal pin 334 is engaged with the recess part at a part of the heat insulator 411 in order to be fixed to the heat insulator 411. The atomization electrode 335 is fixed to the metal pin 334 as the atomization electrode cooler in order to form an L-shape protruding from the metal pin 334. Thereby, a thickness of the divider wall is decreased to enlarge the storage area in the refrigerator.

An edge of the metal pin 334 at an opposite side of the atomization electrode 335 is pressed by a pressure to the divider plate that is molded of resin such as ABS or polypropylene (PP) and that is closer to the freezer compartment. Cool air in the freezer compartment cools the atomization electrode 335 via the divider plate by heat conduction, causes dew condensation on the tip of the atomization electrode 335, and eventually generates water.

As described above, the cooling unit has a simple structure. Thereby, it is possible to achieve the atomization unit with less failures and high reliability. In addition, cooling source of the refrigeration cycle is used to cool the metal pin 334 and the atomization electrode. As a result, atomization can be performed with less energy.

In addition, the opposite electrode 336 having an annular disk shape is arranged closer to the storage compartment than the atomization electrode is, facing the atomization electrode 335. The opposite electrode 336 keeps a predetermined distance from the tip of the atomization electrode 335. A mist ventilation flue 417 is located on extension of the axis of the atomization electrode 335.

The mist ventilation flue 417 is provided in the recess part of the divider wall 414 separating the crisper 307 from the freezer compartment 308.

The divider wall 414 generally has a thickness of 25 mm to 45 mm to keep heat insulation properties and the storage area in the refrigerator. The mist ventilation flue 417 is arranged in the recess part.

The mist ventilation flue 417 has inlets 423 and an inlet ventilation flue 421 by which humidity is supplied from the crisper to the atomization unit. High-humid air flows to the atomization unit along the ventilation flue. Here, the atomization electrode 335 in the atomization unit 339 is cooled via the metal pin 334 by heat conduction from the freezer compartment 308. Thereby, the tip of the atomization electrode has dew condensation.

Mist is generated by applying a high voltage between the tip of the atomization electrode and the opposite electrode. The generated mist is sprayed into the crisper via a mist outlet 416 through the mist ventilation flue 417.

The high voltage generation circuit 360 is electrically connected to the atomization unit 339. The high voltage generation circuit 360 that generates a high voltage has a negative potential side that is electrically wired and connected to the atomization electrode 335 and a positive potential side that is electrically wired and connected to the opposite electrode 336.

In vicinity of the atomization electrode 335, electric discharge always occurs due to mist spraying. Therefore, there is a possibility that the tip of the atomization electrode 335 is worn. The refrigerator 300 is to be operated for 10 years or more. Therefore, the surface of the atomization electrode 335 needs strong surface processing. The atomization electrode 335 is desirably plated with nickel, gold, or platinum, for example.

The opposite electrode 336 is made of a stainless steel, for example. In order to obtain its reliability for a long time, it is desirable that the opposite electrode 336 is applied with surface processing such as platinum plating especially for preventing foreign substance attachment and contamination.

The high voltage generation circuit 360 communicates with and is controlled by the refrigerator control circuit 346 of the refrigerator. Thereby, the high voltage generation circuit 360 turns ON or OFF of application of a high voltage, based on input signals provided from the refrigerator 300 or the electrostatic atomization device 331 as the atomization device.

At the divider wall 414 to which the electrostatic atomization device 331 as the atomization device is fixed, heating units 418 such as heaters are provided in order to prevent dew condensation in the ventilation flue.

At the divider wall 414 to which the electrostatic atomization device 331 as the atomization device is fixed, metal pin heaters 403 are also provided in vicinity of the metal pin in order to adjust a temperature of the atomization electrode 335.

The following describes operations of the refrigerator according to the tenth embodiment.

A thickness of the divider wall 331 at which the electrostatic atomization device 331 as the atomization device is provided is thinner than any other portions of the divider wall 331. The structure can cool the metal pin 334 as the atomization electrode cooler by heat conduction from the freezer compartment having a relatively low temperature. As a result, the atomization electrode 335 is cooled. Here, if a temperature of the tip of the atomization electrode 335 is set to be a dew point or lower, moisture around the atomization electrode 335 is changed to dew condensation on the atomization electrode 335. As a result, water drops can be surely generated.

If a unit for detecting a temperature and/or a unit for detecting a humidity are provided in the refrigerator, it is possible to exactly calculate a dew point according to a change in the environment of the refrigerator.

In the above situation, the atomization electrode 335 is set to have a negative voltage and the opposite electrode 336 is set to have a positive voltage, and the high voltage generation circuit 360 applies a high voltage (for example, 7.5 kV) between the electrodes. Thereby, an air insulation layer is destroyed between the electrodes and eventually corona discharge occurs, which atomizes water at the tip of the atomization electrode 335. As a result, electrically-charged fine mist is generated together with ozone and OH radical. The fine mist has a size of less than 1 µm, measured by units of nanometer, which human eyes cannot see.

The generated fine mist is sprayed into the crisper. The fine mist sprayed from the atomization device 331 is negatively charged. In the meanwhile, the crisper stores greengroceries such as vegetables and fruits, including green leafy vegetables and fruits. The stored greengroceries are often rather wilted due to evaporation during transportation after shopping or evaporation during storing. The greengroceries are usually charged positively, and sprayed fine mist charged negatively is likely to be attracted to the surfaces of the vegetables. Therefore, the sprayed fine mist causes the crisper to have high humidity again and is attached to the surfaces of the greengroceries. This suppresses evaporation of the greengroceries and increases their freshness. Moreover, the sprayed fine mist enters tissues of the vegetables and fruits from interspaces between cells, so as to re-supply water to the cells wilted due to evaporation. As a result, turgor pressure allows the wilted cells to be recovered to be fresh.

The generated fine mist includes ozone, OH radical, and the like, which have strong oxidizing power. Therefore, the generated fine mist can provide deodorization effect for the crisper, sterilization and bacterial killing effects for surfaces of the vegetables. At the same time, the generated fine mist provides oxidation decomposition effect for harmful substances such as agricultural chemicals, wax, and the like attached to the vegetable surfaces, and thereby removes the harmful substances.

As described above, the refrigerator according to the tenth embodiment includes a plurality of storage compartments, and the freezer compartment that is a low-temperature storage compartment keeping a temperature lower than a temperature of the crisper is provided at ceiling side of the crisper that is a storage compartment having the atomization unit. The atomization device is provided at the divider wall at the ceiling side of the crisper.

Thereby, cool air from the storage compartment above the crisper cools the metal pin of the atomization unit, thereby cooling the atomization electrode 335 and eventually generating dew condensation. Therefore, a special cooling device is not necessary and the atomization unit has a simple structure. As a result, it is possible to provide the atomization unit having less failures and high reliability.

The refrigerator has the divider wall separating the storage compartment (crisper) from another area. A low-temperature storage compartment is provided at the ceiling side of the storage compartment. The electrostatic atomization device as the atomization device is equipped to the divider wall at the ceiling. If a storage compartment having a freezing temperature zone, such as the freezer compartment or the ice compartment, is located above the crisper, the atomization device is provided at the divider wall of the ceiling separating the crisper from the storage compartment having the freezing temperature zone. Thereby, the storage compartment having the freezing temperature zone can cool the atomization electrode in the atomization device to generate dew condensation. Therefore, a special cooling device is not necessary. In addition, since mist can be sprayed from the ceiling, the mist is easily spread to the entire compartment.

The atomization unit 339 is not in the storage area of the crisper 307, but located in the divider plate 373 at the rear side of the crisper.

The atomization unit according to the tenth embodiment generates mist by electrostatic atomization. The atomization unit polarizes water drops into fine particles by using electric energy such as a high voltage, thereby generating fine mist. The generated mist is electrically charged. Therefore, the mist is generated to have a potential opposite to that of items such as vegetables and fruits to which the mist is to be attached. For example, mist charged negatively is sprayed to vegetables charged positively. Thereby, force of attachment to the vegetables and fruits is increased. As a result, it is possible to attach the mist to the surfaces of the vegetables and the like more homogeneously, and to increase the attachment force more than that of mist that is not electrically charged. Moreover, the sprayed fine mist can be sprayed directly to food in the crisper. Thereby, the fine mist can be attached to the surfaces of the vegetables by using potentials of the fine mist and the vegetables. As a result, it is possible to efficiently increase freshness of the stored items.

Supply water used in the tenth embodiment is not tap water supplied from the outside, but water caused by dew condensation. Therefore, the water does not include minerals and impurities, which can prevent deterioration of water retention caused by deterioration or clogging of the tip of the atomization electrode.

In the ninth embodiment, since mist includes radical, it is possible to decompose and remove agricultural chemicals, wax, and the like attached to the vegetable surfaces, by using an extremely little water. As a result, water can be saved and input can be reduced.

It should be noted that in the tenth embodiment there is no unit for transporting air to the mist ventilation flue. However, if there is such an air transportation unit, high-humid air can be transported to the ventilation flue more effectively, thereby increasing atomization efficiency. Here, it is desirable that the air transportation unit such as a fan is located between the atomization electrode and the inlets. Thereby, generated mist is not blocked by fins or the like of the fan. As a result, it is possible to spray the mist into the storage compartment more efficiently.

It should be noted that the above-described matters regarding main parts of the tenth embodiment can be applied to any conventional general refrigerator that has the compressor 309 in a mechanical room below a bottom storage compartment in the heat-insulating main body 301.

It should be noted that the present invention is not limited to the above-described embodiment.

### Industrial Applicability

The refrigerator according to the present invention can improve safety of a user even if a liquid spray device spraying liquid is provided in a storage compartment. The present invention can be also applied to devices using an electrostatic atomization device in a low-humid environment, such as home appliances including air conditioners, washing and drying machines, and air cleaning devices, also vehicles, and equipment devices.

## Claims

1. A refrigerator (201) comprising:
a storage compartment (205, 207) that is separated and heat-insulated from another area;
an electrostatic atomization device (215) including an electrode unit (222, 223), said atomization device spraying mist into said storage compartment; and
a protection unit (225, 231) configured to suppress current flowing from said electrode unit to a user,
wherein said protection unit (225, 231) includes a case (225) accommodating said electrode unit,
said case has an opening (226E) through which the mist sprayed by an atomization unit included in said electrostatic atomization device passes, and
said opening has a size not allowing a finger of the user to pass thereby preventing the finger from physically touching the atomization electrode (222), **characterized in that**
said protection unit further includes a current-limit circuit (231) limiting current discharged to the user if the current flows from said electrode unit to the user via said atomization unit.

2. The refrigerator according to Claim 1,
wherein said protection unit (225, 231) further includes a protection cover (228) covering said opening (226E) of said case (225).

3. The refrigerator according to any one of Claims 1 and 2,
wherein said electrode unit (222, 223) includes:
an atomization electrode (222); and
an opposite electrode (223) facing said atomization electrode, and
said electrode unit is far from said protection unit (225, 231) by a predetermined distance.

4. The refrigerator according to Claim 1,
wherein said opening (226E) of said case (225) is located on extension of a center axis of said atomization electrode (222).

5. The refrigerator according to any one of Claims 1 to 4,
wherein said protection unit (225, 231) further includes a water flowout path preventing water drops attached to periphery of said atomization unit from remaining near said electrode unit (222, 223).

6. The refrigerator according to any one of Claims 1 to 5,
wherein said atomization unit is configured to perform electrostatic atomization, and includes a high voltage generation unit (221) which is connected to said electrode unit (222, 223) and is configured to generate a potential difference in said electrode unit.

7. The refrigerator according to any one of Claims 1 to 6, further comprising
a door opening and closing said storage compartment (205, 207),
wherein said protection unit (225, 231) further includes a voltage stop unit (241) configured to stop application of a voltage when said door opens.

8. The refrigerator according to Claim 7,
wherein said voltage stop unit (241) includes a contact point mechanically blocking power supply to said high voltage generation unit (221) when said door opens.

9. The refrigerator according to any one of Claims 1 to 8, further comprising:
a humidity detection unit (128) configured to detect humidity in a space where said electrostatic atomization device (215) is located; and
a high voltage stop unit (241) configured to stop application of a voltage to said electrostatic atomization device (215) when the humidity detected by said humidity detection unit is equal to or less than a predetermined value.

## Patentansprüche

1. Kühlschrank (201) umfassend:
ein Lagerungsabteil (205, 207), das getrennt und wärmeisoliert von einem anderen Bereich ist;
eine elektrostatische Atomisierungsvorrichtung (215), die eine Elektrodeneinheit (222, 223) umfasst, wobei die Atomisierungsvorrichtung ein Aerosol in das Lagerungsabteil sprüht; und
eine Schutzeinheit (225, 231), die konfiguriert ist, einen Strom, der von der Elektrodeneinheit zu einem Benutzer fließt, zu unterdrücken,
wobei die Schutzeinheit (225, 231) ein Gehäuse (225) umfasst, dass die Elektrodeneinheit einschließt,
das Gehäuse eine Öffnung (226E) hat, durch die das Aerosol, das von einer Atomisierungseinheit, die in der elektrostatische Atomisierungsvorrichtung beinhaltet ist, gesprüht wird, austritt, und
die Öffnung eine Größe hat, die es nicht erlaubt, dass ein Finger des Benutzers sie durchgreift, wodurch verhindert wird, dass der Finger die Atomisierungselektrode (222) physisch berührt, **dadurch gekennzeichnet, dass**
die Schutzeinheit ferner eine Strombegrenzungsschaltung (231) umfasst, die den Strom begrenzt, der an den Benutzer abgegeben wird, wenn der Strom von der Elektrodeneinheit über die Atomisierungseinheit zu dem Benutzer fließt.

2. Kühlschrank nach Anspruch 1,
wobei die Schutzeinheit (225, 231) ferner eine Schutzabdeckung (228) umfasst, die die Öffnung (226E) des Gehäuses (225) abdeckt.

3. Kühlschrank nach einem der Ansprüche 1 und 2,
wobei die Elektrodeneinheit (222, 223) umfasst:
eine Atomisierungselektrode (222); und
eine Gegenelektrode (223), die der Atomisierungselektrode gegenüberliegt, und
die Elektrodeneinheit um eine vorbestimmte Distanz entfernt von der Schutzeinheit (225, 231) ist.

4. Kühlschrank nach Anspruch 1,
wobei die Öffnung (226E) des Gehäuses (225) in einer Verlängerung einer Zentralachse der Atomisierungselektrode (222) angeordnet ist.

5. Kühlschrank nach einem der Ansprüche 1 bis 4,
wobei die Schutzeinheit (225, 231) ferner einen Wasserablaufpfad umfasst, der Wassertropfen, die sich in der Umgebung der Atomisierungseinheit befinden, daran hindert, in der Nähe der Elektrodeneinheit (222, 223) zu bleiben.

6. Kühlschrank nach einem der Ansprüche 1 bis 5,
wobei die Atomisierungseinheit konfiguriert ist, eine elektrostatische Atomisierung durchzuführen, und eine Hochspannungserzeugungseinheit (221) umfasst, die mit der Elektrodeneinheit (222, 223) verbunden ist und konfiguriert ist, eine Potenzialdifferenz in der Elektrodeneinheit zu erzeugen.

7. Kühlschrank nach einem der Ansprüche 1 bis 6,
ferner umfassend eine Tür zum Öffnen und Schließen des Lagerungsabteils (205, 207),
wobei die Schutzeinheit (225, 231) ferner eine Spannungsunterbrechungseinheit (241) umfasst, die konfiguriert ist, eine Versorgung mit einer Spannung zu stoppen, wenn die Tür geöffnet wird.

8. Kühlschrank nach Anspruch 7,
wobei die Spannungsunterbrechungseinheit (241) einen Kontaktpunkt umfasst, der die Energieversorgung der Hochspannungserzeugungseinheit (221) mechanisch blockiert, wenn die Tür geöffnet wird.

9. Kühlschrank nach einem der Ansprüche 1 bis 8,
ferner umfassend:
eine Feuchtigkeitserfassungseinheit (128), die konfiguriert ist, Feuchtigkeit in einem Bereich zu erfassen, in dem die elektrostatische Atomisierungsvorrichtung (215) lokalisiert ist; und
eine Hochspannungsunterbrechungseinheit (241), die konfiguriert ist, die Versorgung mit einer Spannung an die elektrostatische Atomisierungsvorrichtung (215) zu unterbrechen, wenn die Feuchtigkeit, die durch die Feuchtigkeitserfassungseinheit erfasst wird, gleich einem vorbestimmten oder geringer als ein vorbestimmter Wert ist.

## Revendications

1. Réfrigérateur (201) comprenant:
un compartiment de stockage (205, 207) qui est séparé et isolé thermiquement d'une autre zone;
un dispositif d'atomisation électrostatique (215) comprenant une unité d'électrodes (222, 223), ledit dispositif d'atomisation pulvérisant un aérosol dans ledit compartiment de stockage; et
une unité de protection (225, 231) qui est configurée pour supprimer un courant circulant depuis ladite unité d'électrodes vers un utilisateur,
dans lequel ladite unité de protection (225, 231) comprend un boîtier (225) abritant ladite unité d'électrodes,
ledit boîtier présente une ouverture (226E) à travers laquelle sort l'aérosol pulvérisé par une unité d'atomisation comprise dans ledit dispositif d'atomisation électrostatique, et
ladite ouverture présente une taille qui ne permet pas qu'un doigt de l'utilisateur passe à travers celle-ci, évitant ainsi que le doigt ne touche physiquement l'électrode d'atomisation (222),
**caractérisé par le fait que**
ladite unité de protection comprend en outre un circuit de limitation de courant (231) qui limite le courant fourni à l'utilisateur lorsque le courant circule depuis l'unité d'électrodes vers l'utilisateur via ladite unité d'atomisation.

2. Réfrigérateur selon la revendication 1,
dans lequel ladite unité de protection (225, 231) comprend en outre un cache de protection (228) qui couvre ladite ouverture (226E) du boîtier (225).

3. Réfrigérateur selon l'une quelconque des revendications 1 et 2,
dans lequel ladite unité d'électrodes (222, 223) comprend:
une électrode d'atomisation (222); et
une contre-électrode (223) qui est située en regard de l'électrode d'atomisation, et
ladite unité d'électrodes est espacée d'une distance prédéterminée de ladite unité de protection (225, 231).

4. Réfrigérateur selon la revendication 1,
dans lequel ladite ouverture (226E) du boîtier (225) est disposée dans un prolongement d'un axe central de l'électrode d'atomisation (222).

5. Réfrigérateur selon l'une quelconque des revendications 1 à 4,
dans lequel ladite unité de protection (225, 231) comprend en outre un trajet d'écoulement d'eau qui empêche des gouttes d'eau se trouvant dans les environs de l'unité d'atomisation de rester à proximité de l'unité d'électrodes (222, 223).

6. Réfrigérateur selon l'une quelconque des revendications 1 à 5,
dans lequel ladite unité d'atomisation est configurée pour effectuer une atomisation électrostatique et comprend une unité de génération de haute tension (221) qui est reliée à l'unité d'électrodes (222, 223) et est configurée pour générer une différence de potentiel dans l'unité d'électrodes.

7. Réfrigérateur selon l'une quelconque des revendications 1 à 6,
comprenant en outre une porte pour ouvrir et fermer le compartiment de stockage (205, 207),
dans lequel ladite unité de protection (225, 231) comprend en outre une unité de coupure de tension (241) qui est configurée pour arrêter une alimentation en tension lorsque la porte sera ouverte.

8. Réfrigérateur selon la revendication 7,
dans lequel ladite unité de coupure de tension (241) comprend un point de contact qui bloque mécaniquement l'alimentation en énergie de l'unité de génération de haute tension (221) lorsque la porte sera ouverte.

9. Réfrigérateur selon l'une quelconque des revendications 1 à 8, comprenant en outre:
une unité de détection d'humidité (128) qui est configurée pour détecter de l'humidité dans un espace où le dispositif d'atomisation électrostatique (215) est situé; et
une unité de coupure de haute tension (241) qui est configurée pour couper l'alimentation en tension du dispositif d'atomisation électrostatique (215) lorsque l'humidité détectée par ladite unité de détection d'humidité est égale ou inférieure à une valeur prédéterminée.
